(19) Europäisches Patentamt European Patent Office Office européen des brevets

(11) **EP 3 323 705 B1**

(12) **FASCICULE DE BREVET EUROPEEN**

(45) Date de publication et mention de la délivrance du brevet:
**08.11.2023 Bulletin 2023/45**

(21) Numéro de dépôt: **17202988.6**

(22) Date de dépôt: **26.04.2013**

(51) Classification Internationale des Brevets (IPC):
***B62M 6/55*** *(2010.01)* ***B62M 6/50*** *(2010.01)*
***B62M 11/14*** *(2006.01)*

(52) Classification Coopérative des Brevets (CPC):
**B62M 6/55; B62M 6/50; B62M 11/145**

(54) **GROUPE MOTOPROPULSEUR**

MOTORANTRIEBSANLAGE

POWER TRAIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.04.2012 BE 201200284**

(43) Date de publication de la demande:
**23.05.2018 Bulletin 2018/21**

(62) Numéro(s) de document de la (des) demande(s) initiale(s) en application de l'article 76 CBE:
**13726434.7 / 2 841 328**

(73) Titulaire: **E2 Drives SA**
**1300 Wavre (BE)**

(72) Inventeur: **Deleval, Arthur**
**3090 Overijse (BE)**

(74) Mandataire: **Gevers Patents**
**Intellectual Property House**
**Holidaystraat 5**
**1831 Diegem (BE)**

(56) Documents cités:
**EP-A2- 0 937 600     WO-A1-2010/092331**
**JP-A- 2008 285 069**

**Description**

La présente invention concerne un groupe motopropulseur, une méthode d'utilisation et une méthode de fabrication de ce groupe motopropulseur, pour un véhicule à pédales, en particulier un vélo, lequel groupe motopropulseur comprend un premier et un deuxième moteur ainsi qu'un train épicycloïdal ayant un porte satellite et un planétaire, lequel premier moteur est relié au train épicycloïdal, lequel groupe motopropulseur comprend également un axe de pédalier sur lequel est monté une couronne qui forme une première entrée du train épicycloïdal.

Un tel groupe motopropulseur est connu de la demande de brevet WO 2010/092331. Le groupe motopropulseur connu est utilisé dans un vélo à assistance électrique. Les vélos à assistance électrique sont des vélos qui sont propulsés conjointement par la force humaine et par la force mécanique produite par une motorisation électrique. Ces vélos se distinguent d'une motocyclette électrique par le fait que la motorisation électrique fournit de la puissance à la transmission uniquement lorsque le cycliste pédale. Avec le groupe motopropulseur connu l'axe de pédalier entraîne le porte satellite du train épicycloïdal. Le deuxième moteur sert essentiellement à fournir de générateur pour charger la batterie et ainsi augmenter l'autonomie.

Un inconvénient du groupe motopropulseur connu est que la puissance de l'assistance fournie est faible malgré la présence de deux moteurs. En effet un seul moteur contribue à fournir à l'utilisateur une assistance au pédalage. Le document JP2008285069A montre le préambule de la revendication indépendante 3.

La présente invention a pour but de réaliser un groupe motopropulseur qui permet de fournir une assistance électrique proportionnelle au couple de pédalage (ou puissance de pédalage) à laquelle les deux moteurs contribuent.

Le deuxième moteur d'un groupe motopropulseur suivant l'invention est engrené sur l'axe de pédalier et le premier moteur est relié au planétaire, le porte-satellite étant relié à un plateau de sortie du groupe motopropulseur, ledit premier respectivement deuxième moteur étant pourvu d'un premier respectivement d'un deuxième capteur agencé pour mesurer la vitesse angulaire du moteur auquel il est associé, lesdits premier et deuxième capteurs étant reliés à une unité de contrôle à laquelle est également relié un troisième capteur agencé pour mesurer la vitesse à laquelle le vélo est propulsé par un cycliste, ledit groupe motopropulseur comprenant une élément de mesure agencé pour produire un signal de mesure indiquant un couple fourni par le premier moteur, ladite unité de contrôle étant agencée pour produire un premier et un deuxième signal de contrôle sur base des vitesses mesurées par les capteurs et de consignes prédéterminées ainsi que du signal de mesure indiquant le couple, lequel premier signal de contrôle est un signal de pilotage de vitesse de rotation qui est fourni au premier moteur, lequel deuxième signal de contrôle est un signal de pilotage en couple qui est fourni au deuxième moteur. Le deuxième moteur assiste le mouvement de pédalage du cycliste puisqu'il est engrené sur l'axe du pédalier. La somme de la puissance produit par le cycliste qui pédale et la puissance du deuxième moteur est transmise via la couronne à la première entrée du train épicycloïdal. Le premier moteur est quand à lui via le planétaire solidaire de la deuxième entrée du train épicycloïdal. Le plateau de sortie, celui qui entraîne normalement la roue via une chaîne, est solidaire de la sortie du train épicycloïdal par l'intermédiaire du porte-satellite. La vitesse du plateau de sortie est donc une relation linéaire des vitesses des deux entrées, à savoir la couronne et planétaire, et son couple est directement lié au couple des deux entrées par les consignes imposées. Ainsi les deux moteurs contribuent à soutenir le cycliste lorsqu'il pédale. En fonctionnement normal, les trois parties indépendantes du train épicycloïdal tournent dans le même sens. Ceci augmente l'efficience en limitant les forces de frottements des roulements car celles-ci sont proportionnelles à la vitesse relative des pièces en mouvement.

Une première forme de réalisation préférentielle d'un groupe motopropulseur suivant l'invention est caractérisée en ce que l'unité de contrôle comporte une entrée pour recevoir un signal de rapport de vitesse indiquant un rapport de vitesse sélectionné par le cycliste parmi un nombre prédéterminé de rapport de vitesse, laquelle unité de contrôle est agencée pour produire ledit premier signal de contrôle également en fonction du signal de rapport de vitesse reçu. Ainsi on offre au cycliste un système de changement électronique des rapports de vitesse, remplaçant les systèmes existants (chaine-dérailleur ou moyeu à changement de vitesse interne). Le contrôle du changement de vitesse se fait de manière électronique à l'aide du signal de rapport de vitesse. Le passage des rapports peut donc se faire de deux manières différentes : soit un changement manuel (commande au volant) des rapports de vitesse, soit un changement automatique des rapports effectués par l'unité de contrôle. La présente invention offre également la possibilité d'obtenir une transmission continuellement variable (plutôt que des rapports discrets). La présente invention pourrait alors proposer à son utilisateur conjointement deux modes de passage des rapports : un mode manuel à rapports discrets pour ceux qui préfèrent rester plus traditionnel et un mode automatique à rapports continus mettant ainsi le cycliste en permanence sur un rapport de vitesse optimal (rapport calculé à partir d'une table 2D couple cycliste-vitesse de roulage). Cette manière est la plus naturelle mais cela n'exclue pas un mode manuel à rapports continus (poignée tournante) et un mode automatique à rapports discrets. De plus, ce système permet un confort de transmission car il est maintenant possible de passer les vitesses sous couple, à la volée et sans à-coup.

Une deuxième forme de réalisation préférentielle d'un groupe motopropulseur suivant l'invention est caractérisé caractérisé en ce que l'unité de contrôle est agencée pour produire un signal pondéré obtenu par multiplication de la vitesse angulaire mesurée du deuxième moteur avec un signal de rapport de vitesse reçu pondéré d'un rapport de réduction du deuxième moteur, et pour produire ledit premier signal de contrôle à l'aide du signal pondéré. Le signal de rapport de vitesse peut ainsi facilement être pris en compte.

L'invention sera maintenant décrite à l'aide des dessins qui illustrent des formes de réalisation préférentielles d'un groupe motopropulseur suivant l'invention. Dans les figures :

la figure 1 se rapporte à un dessin de vélo équipé du groupe motopropulseur suivant l'invention;
la figure 2 illustre un dessin de cadre de vélo constitué d'un boîtier de pédalier pouvant accueillir le groupe motopropulseur suivant l'invention;
la figure 3 schématise la chaîne de puissance en fonctionnement normal du groupe motopropulseur suivant la présente invention;
la figure 4 illustre une vue en éclatée du groupe motopropulseur suivant la présente invention;
la figure 5 illustre le montage du train épicycloïdal et du plateau de sortie,
la figure 6 montre une vue en coupe du groupe motopropulseur suivant la présente invention;
la figure 7 illustre l'engrenage du train épicycloïdal et de l'axe de pédalier;
la figure 8 illustre le porte-satellite;
la figure 9 montre un schéma représentant les différents éléments nécessaire au contrôle des moteurs;
la figure 10 montre le schéma bloc de calcul de la consigne de vitesse du moteur variateur;
la figure 11 illustre le schéma bloc de calcul de la consigne de couple à imposer au moteur de traction;
la figure 12 illustre à l'aide d'un organigramme la logique de contrôle de l'unité de contrôle;
la figure 13 illustre une autre forme de réalisation d'un groupe motopropulseur suivant la présente invention;
la figure 14 illustre la relation entre la vitesse angulaire de pédalage et la vitesse angulaire du premier moteur;
les figures 15 à 17 illustrent les rapports de vitesse;
la figure 18 montre de façon schématique l'assistance fournie au cycliste ; et
la figure 19 illustre une autre forme de réalisation du groupe motopropulseur suivant l'invention.

Dans les dessins une même référence a été attribuée à un même élément ou à un élément analogue. L'invention sera décrite pour une application du groupe motopropulseur à un vélo. Toutefois l'invention n'est pas limitée à un vélo et s'applique à tout véhicule à pédales.

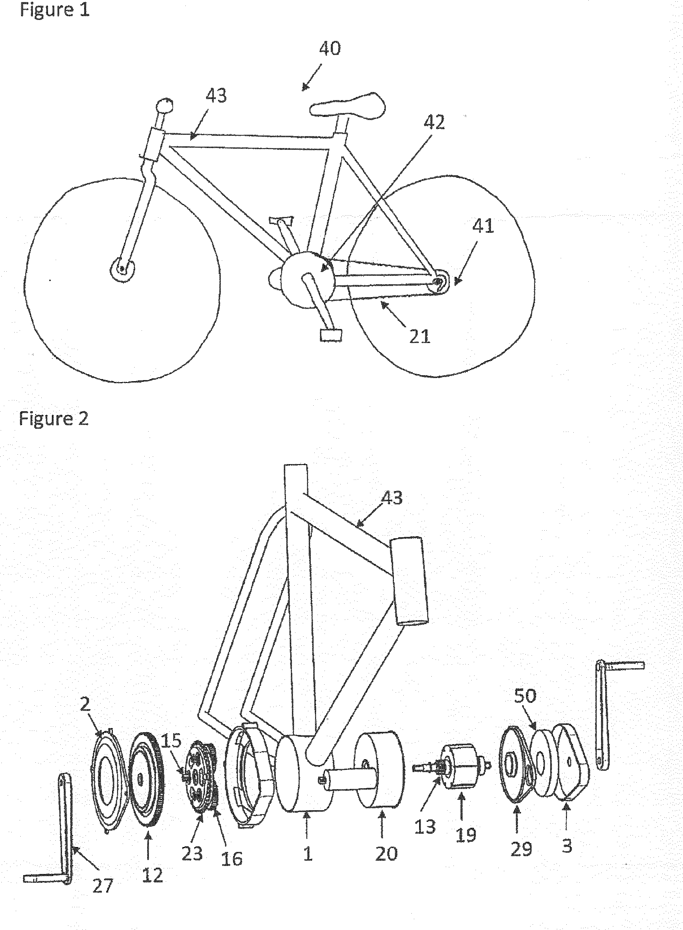

La figure 1 montre de façon schématique un vélo 40 équipé du groupe motopropulseur suivant l'invention. Le vélo comporte un cadre 43 et un pédalier 27, comme illustré plus en détails à la figure 2. Le cadre comporte un boîtier du pédalier 1 ayant un diamètre situé entre 15 et 20 cm, ce qui est plus large que sur un cadre classique d'un vélo. Ce boîtier permet de loger, au moins en partie, le groupe motopropulseur suivant l'invention. A la sortie du groupe motopropulseur se trouve plateau de sortie 23 qui va entraîner le pignon arrière de la roue 41. Le groupe motopropulseur proposé par la présente invention est une motorisation centrale, c'est-à-dire se trouvant au niveau du pédalier du vélo, procurant au vélo un centre de gravité le plus bas possible, ce qui améliore la stabilité du vélo. La majeure partie du groupe motopropulseur s'insère comme une cartouche dans le boîtier 1 de pédalier du vélo. Dans l'exemple illustré à la figure 2 seul un moteur de traction 4, faisant partie du groupe motopropulseur, est logé en dehors du boîtier 1 de pédalier du vélo.

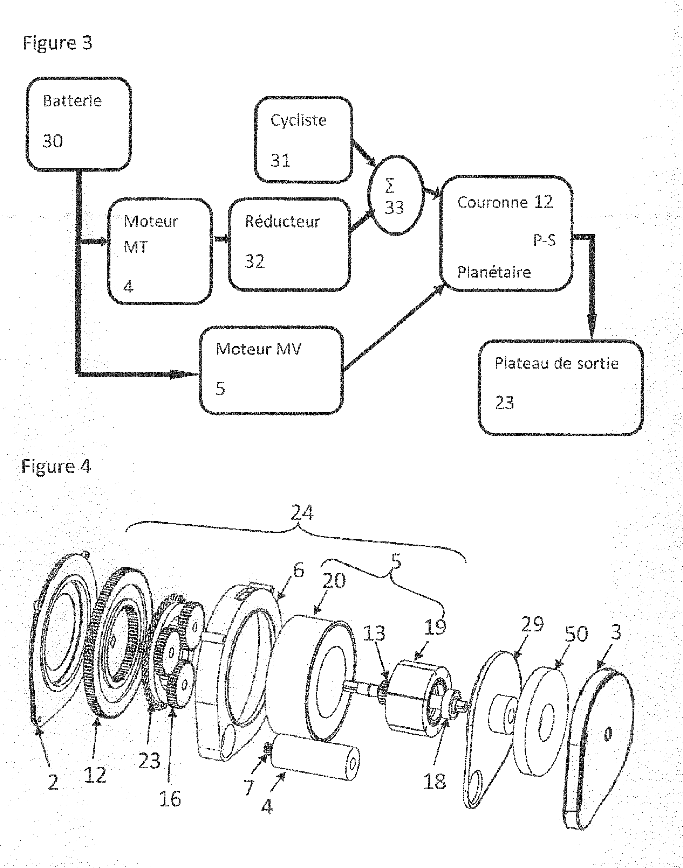

Comme le montre schématiquement la figure 3, le groupe motopropulseur comporte deux moteurs électriques :

• Un premier moteur dit « variateur » (noté MV) 5 se situant dans le boîtier de pédalier
• Un deuxième moteur dit « de traction » (noté MT) 4 fixé à l'extérieur du boîtier de pédalier.

Le motopropulseur est relié à une batterie 30 qui sert entre autres à alimenter en courant électrique le groupe motopropulseur. La majeure partie du groupe motopropulseur est fixée à l'intérieur du boîtier de pédalier 1. Le moteur de traction 4 agit par l'intermédiaire d'un réducteur 32 sur l'axe du pédalier. Ce dernier est également entraîné par le cycliste 31. La traction fournie par le moteur de traction et par le cycliste est additionnée 33 et transmise à la couronne 12 d'un train épicycloïdal 24, lui-même relié au plateau de sortie 23.

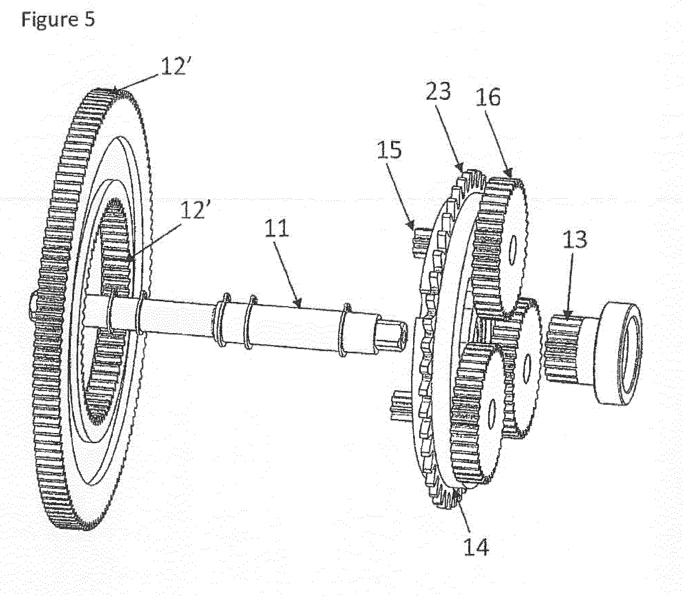

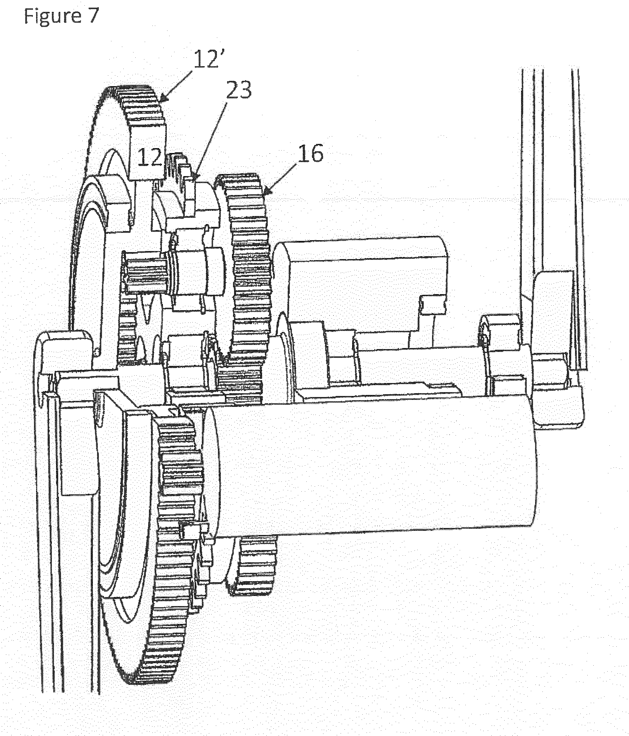

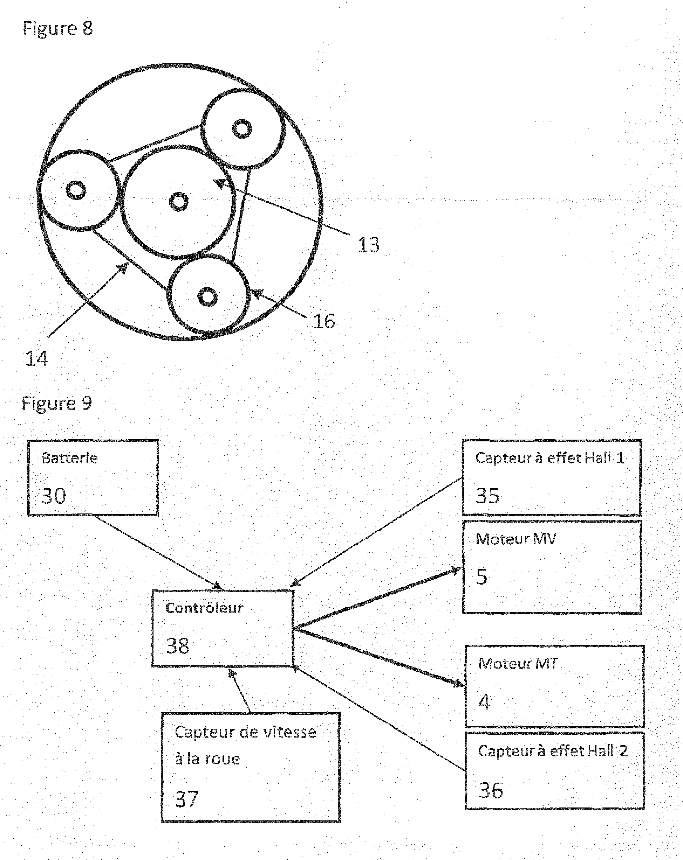

Les figures 2 et 4 à 8 illustrent une forme de réalisation du groupe motopropulseur suivant l'invention. Le groupe motopropulseur, à l'exception du deuxième moteur, est situé à l'intérieur du boîtier de pédalier 1, qui est alors fermé par deux flasques 2 et 3 servant également de support au moteur de traction 4. Le premier moteur 5 comporte un stator 20 monté de façon coaxial par rapport à un rotor 19. Le stator bobiné 20 est fixé dans boîtier de pédalier. Le premier moteur est relié à un planétaire 13, qui fait partie d'un train épicycloïdal 24. Le train épicycloïdal est composé des trois parties indépendantes à savoir le planétaire 13, le porte-satellite 14 et la couronne12. Le planétaire étant de préférence monté de façon solidaire au rotor 19 du premier moteur 5. Le train épicycloïdal comporte également un premier 15 ensemble de petits satellites et un deuxième 16 ensemble de grands satellites, comme illustré au mieux dans la figure 5. De préférence chaque ensemble de satellites comporte trois roues dentées, car ceci permet un bon équilibre entre les pièces en mouvement et le poids du train épicycloïdal. De préférence les petits et les grands satellites du premier et du deuxième ensemble de satellites sont chaque fois solidaire d'un même axe de satellite 17. Il faut noter que les petits satellites 15 et les grands satellites 16 sont tous deux solidaires de l'axe de satellite 17. Les petits et les grands satellites du premier et du deuxième ensemble de satellites sont montés de part et d'autres d'un porte-satellite 14, comme illustré aux figures 5 et 8. Le planétaire s'engraine avec les grands satellites 16 pour augmenter la vitesse du porte-satellite 14. En effet, la vitesse du porte-satellite 14 est une relation linéaire des vitesses de la couronne 12 et du planétaire 13.Le plateau de sortie 23 est monté sur le porte-satellite 14. Le plateau de sortie servant à y monter une chaîne ou une courroie crantée 21, qui sert à entraîner à son tour le pignon de la roue arrière du vélo. Les petits satellites du premier ensemble 15 s'engrainent avec des premières dents 12' prévues à l'intérieur de la couronne 12, faisant elle même partie du train épicycloïdal. Des deuxièmes dents 12" de la couronne s'engrainent avec le deuxième moteur 4, qui est à cette fin pourvue d'un pignon entraîneur 7. La transmission entre le pignon entraîneur 7 et la couronne est fermée de manière étanche avec le cache de fermeture 6. L'axe de pédalier est de préférence rendu solidaire de la couronne 12 du train épicycloïdal, par exemple à l'aide de cannelures non représentées sur le dessin. Bien entendu d'autres systèmes de blocage en rotation peuvent être prévus pour solidariser l'axe de pédalier et la couronne.

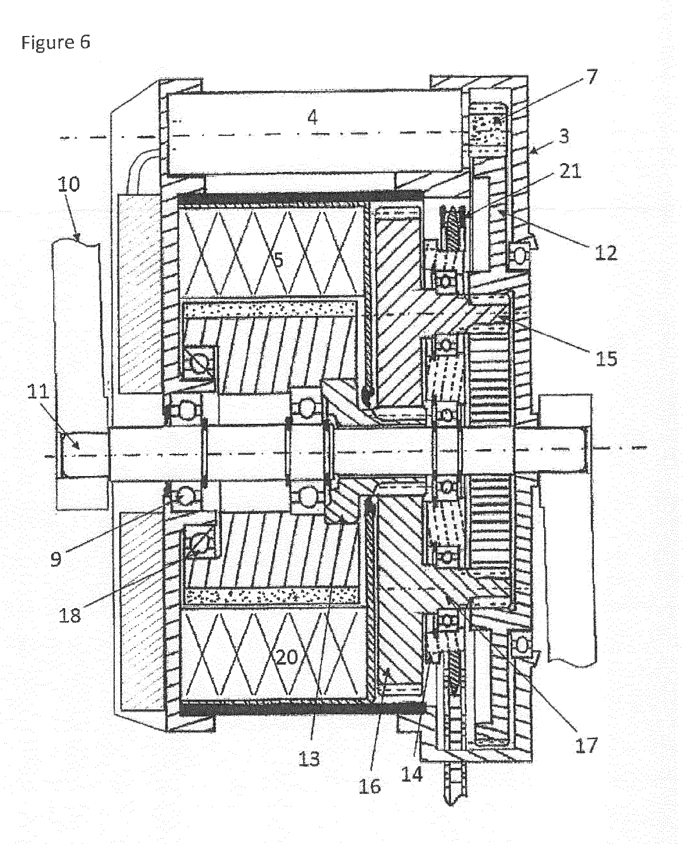

Un axe de pédalier 11 traverse le train épicycloïdal et est soutenu par des roulements 9 comme illustré à la figure 6. La couronne 12, qui est reliée à l'axe de pédalier, forme ainsi une première entrée du train épicycloïdal. En fonctionnement normal la couronne 12 entraîne les petits satellites 15, faisant ainsi tourner le porte-satellite 14 solidaire du plateau de sortie 18. Ce plateau de sortie entraîne la chaîne ou la courroie crantée 21. Une fine paroi d'étanchéité 10 sépare le train épicycloïdal du moteur variateur 5. Plusieurs joints d'étanchéité assurent l'étanchéité entre le moteur variateur 5 et les parties mécaniques graissées. Enfin l'unité de contrôle est de préférence logée dans un boîtier 50 placé près des moteurs afin de limiter le câblage de fils électriques. Ce boîtier est de préférence de forme circulaire pour épouser celle du boîtier du pédalier.

En fonctionnement normal le moteur de traction 4 assiste le cycliste en entraînant l'axe du pédalier 11 via deux engrenages formés par le pignon entraîneur 7 et la couronne 12. En effet comme le pignon 7 du deuxième moteur 4 est engrené sur les dents 12" de la couronne, la rotation du pignon entraîné par le deuxième moteur va entraîner la couronne en rotation. Suivant une autre forme de réalisation (non illustrée) le pignon 7 peut être en prise avec une roue réceptrice, qui est montée sur l'axe du pédalier. L'association du couple fourni par le deuxième moteur 4 et de la force humaine fait tourner la couronne 12. Cette disposition est encore plus intéressante si le deuxième moteur 4 bénéficie, tout comme le cycliste, d'un changement de vitesse (de la transmission variable), travaillant ainsi à un meilleur rendement. Le groupe motopropulseur suivant l'invention peut fonctionner soit avec plusieurs rapports de vitesse, soit avec un seul rapport de vitesse.

Chaque moteur à sa fonction. Le moteur variateur a pour but de fournir en permanence le rapport de transmission que l'unité de contrôle lui impose, quel que soit le niveau d'assistance (= rapport de la puissance électrique totale fournie sur la puissance humaine fournie) et quelle que soit la vitesse de roulage. Le rapport de transmission dépend en fait du rapport de la vitesse du moteur variateur 5 et de celle du pédalier 27. Ce rapport équivaut au coefficient angulaire de la droite représentant l'évolution de la vitesse du MV en fonction de la vitesse du pédalier, comme il sera décrit plus en détails ci-dessous. Il est donc possible de rester sur un rapport de transmission constant en gardant ce coefficient angulaire constant. Pour changer de rapport, le cycliste change la valeur de ce coefficient angulaire. Le moteur variateur est donc piloté en vitesse angulaire afin de remplir sa fonction de variateur de vitesse. Bien sûr ce moteur donne également de la puissance dans la chaîne de transmission et donc l'intégralité de sa puissance se retrouve à la roue, aux frottements près bien entendu. Le rotor 19 du premier moteur est monté sur une roue libre 18, elle même montée sur le châssis 29 pour empêcher le premier moteur variateur de tourner en sens inverse (sens contraire au sens de rotation prédéterminé du pédalier). La fonction de cette roue libre est de permettre une transmission de puissance purement mécanique à la roue fonctionnant en cas de rupture avec toute sorte d'alimentation des moteurs. En cas de panne moteur, le cycliste peut ainsi toujours pédaler pour rentrer chez lui. Ce mode de fonctionnement correspond au plus petit rapport de transmission. Durant ce mode le premier moteur variateur est non alimenté et le deuxième moteur de traction peut être alimenté pour assister le cycliste.

Le moteur de traction 4 assiste le mouvement du cycliste en ajoutant du couple sur le pédalier. Durant certains cas de fonctionnement, ce moteur peut également freiner le mouvement de pédalier du cycliste. Son rôle est en fait de suivre en permanence le niveau d'assistance que l'unité de contrôle lui impose, quel que soit le rapport de transmission « enclenché » et quelle que soit la vitesse de roulage. Ce moteur est piloté en couple.

Le vélo sur lequel le groupe motopropulseur est monté peut également être équipé d'une roue libre traditionnelle dans le pignon arrière de roue empêchant la chaîne (ou courroie) de tourner lorsque le vélo continue à rouler grâce à son inertie. Une autre version (détaillée plus bas) utiliserait un pignon fixé à la roue sans roue libre intermédiaire permettant ainsi de freiner sur le moteur variateur et d'ainsi recharger le moteur variateur.

Le contrôle des deux moteurs sera maintenant décrit plus en détails. Le couple à fournir par le premier moteur 5 au porte-satellite est imposé par la loi de route. Il est piloté en vitesse pour suivre une consigne de rapport de transmission. La vitesse du deuxième moteur est imposé par la cadence de pédalage du cycliste, car relié cinématiquement par des engrenages ou autre système de transmission à la couronne. Celui-ci sera donc piloté en couple afin d'assister le cycliste dans son effort. La consigne de vitesse est une fonction linéaire de la vitesse de pédalage, le coefficient multiplicateur dépend du rapport de vitesse choisie par le cycliste ou déterminé par l'unité de contrôle en fonction de la vitesse à laquelle le cycliste roule. A cette fin l'unité de contrôle comporte une entrée pour recevoir un signal de rapport de vitesse indiquant un rapport de vitesse sélectionné par le cycliste parmi un nombre prédéterminé de rapport de vitesse. Lorsque le changement de vitesse est automatique, le groupe motopropulseur comprend un troisième capteur relié à l'unité de contrôle et agencé pour mesurer la vitesse à laquelle le vélo est propulsé par un cycliste. L'unité de contrôle étant alors agencée pour produire sur base de la vitesse mesurée un signal de rapport de vitesse indiquant un rapport de vitesse sélectionné parmi un nombre prédéterminé de rapport de vitesse.

Un autre atout du présent groupe motopropulseur est sa capacité à pouvoir fonctionner en frein et ainsi récupérer l'énergie du freinage pour recharger la batterie si la roue libre initialement installée sur le pignon arrière de roue est omise. A ce moment, si le vélo est lancé avec une certaine inertie ou si celui-ci dévale une pente, la chaîne tourne et entraine le plateau de sortie du groupe motopropulseur. Comme le plateau de sortie est relié au porte-satellite, ce dernier agit maintenant comme un différentiel de puissance. Il aura tendance à faire tourner le moteur variateur (dans son sens normal) qui sera à ce moment contrôlé comme un générateur pour freiner le vélo et transmettre ainsi de la puissance vers la batterie. Ce système pourrait par exemple être activé par un rétropédalage, comme le système torpédo. La puissance du frein et donc la quantité d'énergie fournie à la batterie pourrait être contrôlé en fonction de la force de rétropédalage que le cycliste exerce.

Sur le plus petit rapport de vitesse, le premier moteur 5 n'est pas alimenté en courant électrique. Seul le deuxième moteur participe à l'assistance électrique. Le planétaire est bloqué grâce à la roue libre 18 liant le bâti (flasque gauche (2)) au rotor 19 du premier moteur 5. Pour augmenter le rapport de transmission, il faut mettre en route le premier moteur 5. Celui-ci commence alors à participer à l'assistance électrique globale. Au plus on augmente la vitesse du premier moteur 5, au plus on augmentera le rapport de transmission et au plus celui-ci participera à l'assistance globale.

La figure 9 illustre de façon schématique le branchement électrique des moteurs 4 et 5 et de l'unité de contrôle 38. De préférence chaque moteur est équipé d'un capteur à effet Hall 35, 36 pouvant compter jusqu'à six comptes par tour de rotor. L'information de ces capteurs est envoyée vers l'unité de contrôle pour être analysé. L'unité de contrôle calcule également le courant injecté dans chaque moteur afin de calculer le couple sur chaque moteur (couple proportionnel à l'intensité du courant électrique). Enfin, un capteur de vitesse 37 à la roue est nécessaire à l'unité de contrôle, si différents rapport de vitesse sont disponibles. Pour mesurer le couple imposé par le cycliste sur les pédales, l'unité de contrôle effectue un calcul en utilisant le couple sur l'arbre des deux moteurs. Celui-ci est facilement mesurable, vu que le couple est proportionnel au courant passant dans les bobines d'induction du moteur à courant direct. Quand le cycliste accélère, l'unité de contrôle peut calculer la vitesse du vélo à partir des vitesses des moteurs, par exemple avec les équations cinématiques du train épicycloïdal. Quand le vélo est en roue libre, la vitesse de la roue est découplée de la vitesse du plateau de sortie et ce capteur de vitesse 37 est donc nécessaire.

La compréhension du fonctionnement du groupe motopropulseur suivant l'invention nécessite de faire appel à la physique et c'est pour cette raison que cette physique sera d'abord décrite. Etant entendu que plusieurs abréviations seront utilisées, ces abréviations seront d'abord définies dans le tableau repris ci-dessous.

| Notation | Désignation | Unité |
|---|---|---|
| $\omega_{plat}$ | vitesse angulaire du plateau de sortie | [rad/s] |
| $\omega MV$ | vitesse angulaire du planétaire du premier moteur | [rad/s] |
| $\omega MT$ | vitesse angulaire du deuxième moteur | [radis] |
| $\omega_{ped}$ | vitesse angulaire du pédalier | [radis] |
| $\omega_R$ | vitesse angulaire de la roue arrière du vélo | [rad/s] |
| $\omega_{pAR}$ | vitesse angulaire du pignon arrière | [rad/s] |
| $C_x$ | couple sur l'élément x | [N.m] |
| $P_x$ | puissance sur l'élément x | [W] |
| R | rapport de réduction d'un train épicycloïdal | [s.u.]* |
| $R_{trans}$ | rapport de réduction de la transmission | [s.u.]* |
| $R_{deuxième\ moteur}$ | rapport de réduction du deuxième moteur | [s.u.]* |
| E | Etendue de vitesse | [%] |
| demul | démultiplication existant entre la vitesse de pédalage et la vitesse de la roue arrière | [s.u.]* |

(suite)

| Notation | Désignation | Unité |
|----------|-------------|-------|
| NivAssist | niveau d'assistance électrique | [s.u.]* |
| a | coefficient multiplicateur de vitesse du premier moteur | [s.u.]* |
| mes | Signifie « mesuré » | / |
| err | Signifie « erreur » | / |
| cons | Signifie «consigne » | / |
| *(s.u.)= sans unité | | |

Dans un premier temps et pour faciliter la compréhension des équations mathématiques, le raisonnement sera explicité sans le deuxième moteur 4 dit de traction. C'est le train épicycloïdal qui contribue à l'innovation principale de cette nouvelle motorisation. En reprenant les équations du train épicycloïdal on notera que:

$$\omega_{plat} = \frac{\omega_{MVpl} + R\omega_{ped}}{R+1} \quad (1)$$

$$C_{MV} = \frac{C_{ped}}{R} = \frac{C_{plat}}{R+1} \quad (2)$$

avec R défini par les cotes dimensionnelles des éléments du train épicycloïdal double, c'est-à-dire avec les petits et les grands satellites.

La vitesse de rotation $\omega_{plat}$ et le couple sur le plateau $C_{plat}$ sont imposés par la situation de roulage, ce qui impose $C_{MV}$ et $C_{ped}$ (par la relation (2)). Toutefois cela laisse le libre choix pour $\omega_{ped}$ et $\omega_{MV}$. La vitesse de pédalage est en fait imposée par le cycliste, celle-ci se situe entre 30 et 90 tr/min en moyenne selon les conditions de roulage. Ceci permet d'ajuster la vitesse de rotation pour donner de l'assistance mais, le cas échéant, aussi pour changer artificiellement le rapport de vitesse vu par le cycliste. Selon la relation (2), le couple de pédalage est relié à celui du moteur variateur qui est facilement mesurable par une mesure de courant passant dans l'inducteur. Ainsi le groupe motopropulseur suivant l'invention ne nécessite aucun capteur de couple de pédalage. Ceci est un avantage non-négligeable en terme de prix de reviens du mécanisme car les capteurs de couples utilisés dans les autres types de motorisations sont complexes et très coûteux.

Lorsque le premier moteur 5 est hors tension, la couronne 12 du train épicycloïdal, solidaire de l'axe du pédalier, entraîne les satellites 6 et 15. Le planétaire 13, lié au bâti du boîtier de pédalier par une roue libre, est à ce moment bloqué à une vitesse nulle puisqu'il n'est pas entraîné par le premier moteur. Le porte-satellites 14 lié au plateau de sortie 23 se voie donc entraîné selon le plus petit rapport de démultiplication, à une vitesse légèrement inférieure à la vitesse de pédalage :

$$\omega_{plat} = \frac{R}{R+1} \cdot \omega_{ped}$$

Pour augmenter le rapport de démultiplication, il faut mettre en mouvement le premier moteur 5, qui entraînera alors, via une roue libre, le planétaire 13 du train épicycloïdal. Ce dernier tournera maintenant une vitesse supérieure à zéro. Le plateau tourne cette fois-ci à une vitesse décrite par l'équation ci-dessous:

$$\omega_{plat} = \frac{\omega_{MV} + R\omega_{ped}}{R+1} \quad \text{avec} \quad \omega_{MV} > \omega_{ped}$$

La vitesse de rotation $\omega_{MV}$ du premier moteur sera, selon le rapport de vitesse engagé (sélectionneur électronique au guidon ou mode tout automatique), égale à un coefficient a multiplié par la vitesse de rotation $\omega_{ped}$ de pédalage. Une demande de changement de rapport provenant du cycliste ou du contrôleur automatique aura donc pour effet de changer ce coefficient a. Le premier moteur 5 sera donc régulé en vitesse par une boucle de régulation utilisant l'information d'un capteur mesurant la vitesse angulaire de l'axe du pédalier. Ce fonctionnement est validé par la définition de la démultiplication (terme simplifié signifiant le rapport de démultiplication du vélo). En effet, en gardant un coefficient « a » constant, la démultiplication reste, elle aussi, constante. En augmentant le coefficient « a », la démultiplication augmente.

$$avec\ \omega_{MV} = a.\omega_{ped}\ et\ a \in [0:val_{lim}], on\ obtient\ facilement :$$

$$demul = \frac{\omega_R}{\omega_{ped}} = \frac{\omega_R}{\omega_{plat}}\frac{\omega_{plat}}{\omega_{ped}} = R_{trans}.\frac{a+R}{R+1}$$

Attention, ce changement artificiel de démultiplication vu par le cycliste impose au groupe motopropulseur un niveau d'assistance différent pour chaque rapport de vitesse engagé. Effectivement, en faisant un bilan de puissance, on peut calculer le niveau d'assistance définit par la puissance électrique divisée par la puissance humaine.

$$P_{plat} = P_{ped} + P_{MV} = C_{ped}.\omega_{ped} + C_{MV}.\omega_{MV}$$

En changeant $\omega_{MV}$ et $C_{MV}$ par les relations définies précédemment, on obtient facilement:

$$P_{plat} = \frac{a+R}{R}.P_{ped}$$

Le niveau d'assistance définit comme le rapport entre la puissance électrique fournie sur la puissance totale fournie au plateau de sortie. Ici, la définition se réduit à l'expression suivante :

$$NivAssist = \frac{P_{MV}}{P_{plat}} = \frac{a}{a+R}$$

Le niveau d'assistance augmente donc bien avec le régime de rotation du premier moteur. Cela veut dire que sur les faibles rapports de démultiplication, le niveau d'assistance sera faible et pour les forts rapports de démultiplication, le niveau d'assistance sera au maximum.
Le groupe motopropulseur suivant l'invention comporte également le deuxième moteur 4. Le deuxième moteur dit de traction a plusieurs rôles intéressants. Son premier rôle est bien évidemment d'obtenir un degré de liberté dans le contrôle de ce groupe-motopropulseur afin d'adapter le niveau d'assistance à n'importe quelle situation. Le deuxième moteur est directement relié, via un ensemble réducteur de roues dentées, à l'axe de pédalier de telle sorte qu'il est maintenant possible d'augmenter le niveau d'assistance sur les faibles rapports de démultiplication. La disposition de ce deuxième moteur 4 dans la chaîne cinématique est intéressante car ce moteur bénéficie, tout comme le cycliste, du rapport de démultiplication, permettant un couple important lors de situations de roulage demandant beaucoup d'effort comme une côte importante ou le roulage sur un sol déformable. Le niveau d'assistance définit comme le rapport de l'énergie électrique sur l'énergie totale fournie au plateau de sortie devient donc :

$$NivAssist = \frac{P_{MV} + P_{MT}}{P_{MV} + P_{MT} + P_{Homme}}$$

En modifiant cette expression avec les équations établies précédemment, on obtient le résultat :

$$NivAssist = \frac{a + \dfrac{R_{MT}C_{MT}}{C_{MV}}}{a + R}$$

Le deuxième moteur sera donc contrôlé en boucle fermée avec une consigne de couple permettant le bon niveau d'assistance, sa vitesse de rotation étant imposée par la vitesse de pédalage via le rapport de réduction dicté par la géométrique de sa transmission.

$$\omega_{MT} = R_{MT} \cdot \omega_{ped}$$

Etant directement lié au pédalier, sans roue libre, ce moteur peut également fonctionner en mode frein, permettant dans tous les cas une totale maîtrise du niveau d'assistance. Un fonctionnement en mode générateur, renvoyant l'énergie ainsi crée dans le moteur variateur est également envisagé en mode pédalage pur (aucun courant provenant de la batterie) pour un roulage à vitesse supérieure à la vitesse réglementée. Cette façon de faire remplacerait ainsi l'ajout d'un second train épicycloïdal nécessaire à cette fonction.

Enfin, la vitesse de la roue arrière du vélo est liée mathématiquement à celle du plateau de sortie via un rapport de réduction imposé par la géométrie des pignons. La relation de cette transmission est :

$$\omega_R = R_{trans} \cdot \omega_{plat}$$

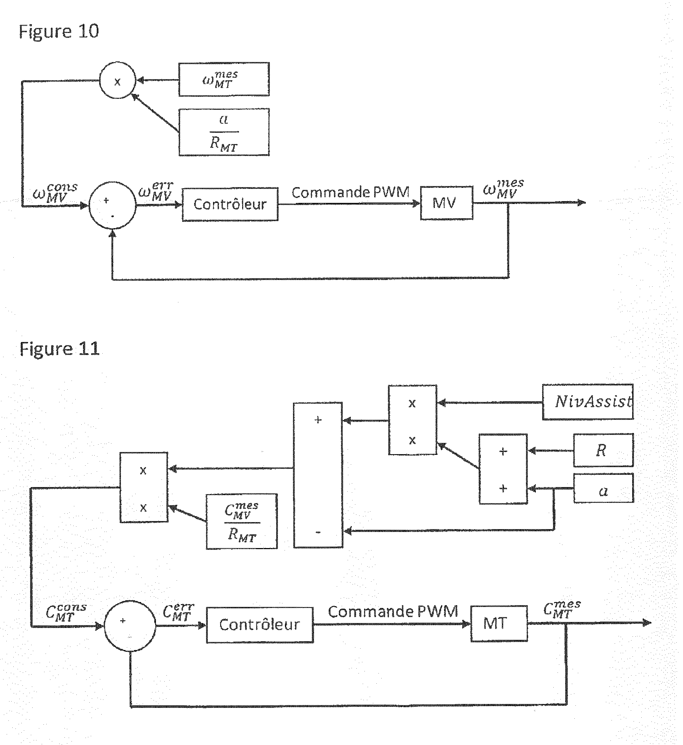

La figure 10 montre le schéma bloc de calcul de la consigne de vitesse du moteur variateur. La vitesse angulaire mesurée $\omega$MT du deuxième moteur et le coefficient multiplicateur a divisé par le rapport de réduction RMT du deuxième moteur sont multipliés entre eux pour former la vitesse angulaire de consigne $\omega$MV au premier moteur. L'unité de contrôle 38 est montée dans une boucle de régulation afin de veiller que le premier moteur soit effectivement alimenté de façon à tourner à la vitesse angulaire de consigne. Afin de garder un rapport de transmission constant, il faut que le coefficient angulaire de la droite « vitesse du premier moteur - vitesse de pédalage » soit constant. L'unité de contrôle impose donc au moteur variateur une vitesse proportionnelle à la vitesse de pédalage sur un même rapport de vitesse. Pour faire varier le rapport de transmission, il suffit de changer la valeur de ce coefficient angulaire noté « a ».

La figure 11 illustre le schéma bloc de calcul de la consigne de couple à imposer au moteur de traction 4. Celle-ci est fonction du couple résistant présent sur le rotor du premier moteur 5. La consigne de couple du deuxième moteur dépendra également du niveau d'assistance à imposer au cycliste. Le rapport de réduction du train épicycloïdal R et niveau d'assistance le coefficient multiplicateur a sont additionnés pour ensuite être multiplié avec le niveau d'assistance déterminé. On détermine ensuite la consigne de couple CMT pour le deuxième moteur à partir de ce niveau d'assistance déterminé et du couple mesuré du premier moteur. Une boucle de régulation est également prévue pour veiller à ce que le deuxième moteur fournit le couple déterminé par le couple de la consigne.

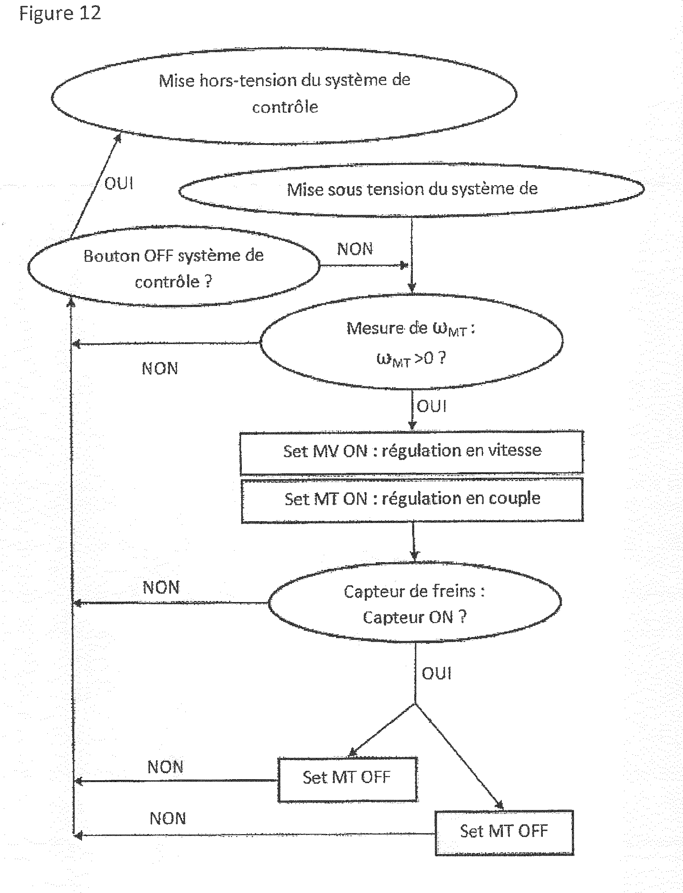

La figure 12 montre à l'aide d'un organigramme la gestion réalisée par l'unité de contrôle. Lorsque le groupe motopropulseur est mis sous tension la vitesse angulaire du deuxième moteur est mesurée. Si elle est supérieure à zéro la vitesse de consigne de premier moteur et le couple de consigne du deuxième moteur sont déterminés. De préférence il est également vérifié si le capteur de freins est activé avant de fournir les consignes aux moteurs.

Comme décrit précédemment, le bon fonctionnement du groupe motopropulseur est assuré à haute vitesse tant que le premier moteur tourne. Or, certains pays interdisent l'assistance électrique au dessus d'une certaine limitation (25 km/h en Europe, 32 km/h au Canada). Ce qui voudrait dire que le moteur variateur devrait être mis hors tension une fois la vitesse limite atteinte, passant ainsi d'un rapport de vitesse haut au rapport le plus bas, et mettant ainsi le cycliste dans une situation inconfortable si celui-ci désire franchir cette vitesse. Afin d'éviter ce désagrément, il faut trouver une solution technique qui permet de garder un rapport de vitesse proche de celui sur lequel le cycliste était avant de dépasser la vitesse limite.

Il y a trois solutions possibles face à cette problématique :

1. Garder le mécanisme simple et donc, couper les deux moteurs. Le cycliste est contraint à passer au plus petit rapport de vitesse s'il essaye de dépasser la limite de vitesse, ce qui rend difficile l'utilisation au dessus de cette limitation.

2. Etablir un système de verrouillage mécanique du rapport de vitesse supérieur :

a. En intégrant un deuxième train épicycloïdal dans le mécanisme dont la couronne tournerait librement en fonctionnement « assisté » et, une fois freinée et les moteurs arrêtés en mode « pédalage pur », actionnerait le plateau de sortie via ce train.

b. En intégrant un axe composé de deux roues dentées de taille différente dont une serait solidaire de l'axe tandis que l'autre serait entraînée par crabot. Cet axe relierait le plateau au pédalier avec un rapport de démultiplication proche de deux

c. Rajouter un axe sur roulement équipé d'une roue dentée sur chaque extrémité et connectant directement le pédalier au plateau de sortie.

3. Garder cette simplicité de mécanisme et utiliser le deuxième moteur en mode générateur afin d'alimenter le MV.

Les trois solutions seront décrites une à une ci-dessous.

La première solution a l'avantage d'être la plus simple et la moins onéreuse, mais peut faire fuir les futurs acquéreurs de ce type de technologie, bien qu'une vitesse supérieure à 25 km/h soit peu souvent utilisée sur un vélo électrique.

La deuxième solution nécessite l'ajout de pièces en mouvement appliquant au mécanisme de base un excès de poids, de complexité et de coût de fabrication. Cependant, le mécanisme obtenu au final reste intéressant malgré ces contraintes. Notez que pour ce fonctionnement, une roue libre entre le rotor du premier moteur et le planétaire a été ajoutée permettant au planétaire de tourner plus vite que le rotor.

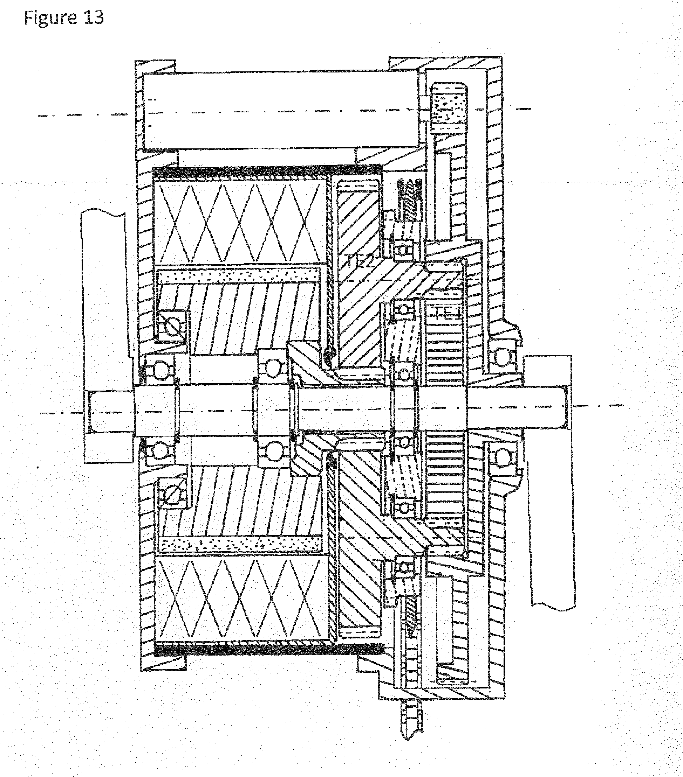

La figure 13 illustre le fonctionnement avec l'option (2a) du train épicycloïdal additionnel. Le train épicycloïdal TE2 est inséré du même côté que le TE1. Dans cette configuration, la couronne du TE1 (le pédalier) est en fait liée au porte-satellite du TE2 et le porte-satellite du TE1 (le plateau) est lié au planétaire du TE2. En mode « assisté », la couronne du TE2 tourne dans le vide. Une fois le mode « pédalage pur » enclenché, un actionneur vient bloquer la couronne du TE2, le planétaire de TE1 tourne cette fois plus vite que le premier moteur, qui est à l'arrêt (roue libre entre les deux) et le pédalier entraîne à lui seul le plateau de sortie via un rapport de vitesse fixe dépendant du rapport interne de TE2.

Cette solution demande l'insertion d'un train épicycloïdal supplémentaire, d'un système de blocage mécanique (type frein) et d'un actionneur supplémentaire pour assurer cette seule fonction qui est très peu utilisée par les utilisateurs de vélos à assistance électrique. Cette configuration ajoute également un degré de difficulté de fabrication et d'assemblage ainsi que d'éventuels problèmes d'étanchéité. Enfin, l'ajout de pièces tend à augmenter le coût, le poids et l'encombrement du mécanisme.

Suivant une troisième solution une roue dentée crabotée est prévue. Par rapport au mécanisme de base, un axe et des roues dentées ont été rajoutés en partie supérieure. L'axe est fixé via des paliers dans le bâti du groupe motopropulseur. La roue dentée 3a est solidaire de l'axe et est entraînée par la couronne du TE1 (pédalier). La roue n°2 tourne avec l'axe mais est libre en translation axiale. La roue n°1 est montée sur roulement (ou cage à aiguilles) et est donc désolidarisée de son axe en mode « assisté ». La puissance provenant du deuxième moteur est transmise au pédalier par l'intermédiaire de la roue n°2 à dents hélicoïdales. La poussée axiale procurée par l'engrenage hélicoïdal garde la roue n°2 loin de la n°1. Une fois le mode « pédalage pur » enclenché, c'est le pédalier qui entraîne le premier moteur et la poussée axiale des dents hélicoïdales pousse cette fois-ci la roue n°2 vers la roue n°1 qui crabote dans celle-ci. Le plateau de sortie se voit donc maintenant entraîné directement par le pédalier selon un rapport de réduction propre au rapport du nombre de dents des roues n°1 et n°3. Par rapport, à la solution (a), cette deuxième solution mécanique nécessite moins de pièces et est donc plus légère. Celle-ci semble également moins chère et moins complexe car elle ne demande pas de nouvel actionneur. Cependant, il y a toujours un risque lié à l'étanchéité de l'assemblage et la solution risque d'être plus encombrante axialement.

Le groupe motopropulseur peut également fonctionner avec un axe court-circuit. Une fois embrayé, l'axe équipé de ces deux roues dentées vient en fait court-circuiter l'axe du pédalier et le plateau de sortie. C'est le rapport des roues dentées qui imposera la vitesse mécanique imposée. Cette alternative est la plus simple des trois. C'est sans doute la moins coûteuse également. La seule difficulté se trouve au niveau de l'embrayage. Enfin, l'ajout de pièces tend à augmenter le coût, le poids et l'encombrement du mécanisme.

La troisième solution ne nécessite aucun rajout de pièces mécaniques supplémentaires par rapport au système de base illustré aux figures 4 à 7. La technique se situe ici dans l'électronique de puissance. Le principe consiste à utiliser le deuxième moteur de traction en tant que générateur électrique et de réinjecter l'électricité ainsi produite dans le moteur variateur. Pour que cette solution fonctionne, il faut que le lien mécanique entre le deuxième moteur et le pédalier soit réversible, aucune roue libre ne sera donc installée entre les deux.

Le fonctionnement de ce système est le suivant (figure 12). L'énergie venant des jambes du cycliste parcourt ici un double chemin. Une partie entraîne directement la couronne de TE1 tandis que l'autre entraîne le planétaire via le deuxième moteur et le premier moteur. Le deuxième moteur est en fait actionné via le réducteur, produisant ainsi un courant électrique alimentant le premier moteur. Le deuxième moteur sera piloté en couple de freinage afin de définir la partie d'énergie passant par cette boucle et ainsi définir le rapport de vitesse de la transmission globale. Le contrôle de la force de freinage, et donc de la puissance électrique, fournit se fait électroniquement en faisant varier le phasage des champs magnétiques dans l'induit du moteur. Un autre avantage de cette solution est de pouvoir récupérer une partie du couple pour charger la batterie en cas d'un sur effort du cycliste qui empêcherait le premier moteur de garder le rapport de vitesse enclenché. De la même manière, il est possible de freiner le mouvement du pédalier à la reprise du mouvement de pédalage après un fonctionnement en roue libre à vitesse haute vitesse le temps que le premier moteur reprenne sa vitesse de consigne (afin de récupérer le rapport de vitesse sur lequel il était avant d'entrer en roue libre).

Le désavantage de cette solution est le bas rendement de la deuxième boucle d'énergie. En effet, un moteur électrique sans brosse ayant un rendement approximatif de 85% (en considérant que le rendement en mode générateur est le même), le rendement de transmission du deuxième chemin énergétique est de l'ordre 72%, diminuant ainsi le rendement de transmission global. Ceci rendra l'utilisation du vélo en « mode pédalage pur » plus physique. Une manière d'augmenter ce rendement de transmission perçu par le cycliste et ainsi lui faire ressentir le sentiment de rouler sur un vélo « classique » est de fournir une légère énergie provenant de la batterie. La batterie comblerait ainsi la perte d'énergie induite par ce type de fonctionnement. Il en découle une perte d'énergie électrique et par là une perte d'autonomie, mais cette idée est défendable si le pourcentage d'utilisation du VAE au dessus des limitations de vitesse est pris en compte. En plus de cela, cette idée est très prometteuse car le mécanisme reste très simple de conception, léger, compact et peu coûteux à la fabrication. C'est pourquoi cette solution a été jugé la plus intéressante.

Une variante de cette technologie serait d'utiliser le deuxième moteur en générateur, d'envoyer l'électricité ainsi produite dans la batterie et d'alimenter le MV en conséquence depuis la batterie. L'alimentation par la batterie est en effet de meilleure qualité (tension, débit) et le fonctionnement du vélo en sera meilleur. Ce type de schéma revient identiquement à l'idée expliqué ci-dessus mais avec un autre chemin utilisé par l'électricité. Il faudra néanmoins vérifier que ce type de fonctionnement soit accepté au niveau de l'homologation de la motorisation.

Un autre gros avantage de la troisième solution est qu'elle permet de rouler avec plusieurs rapports de vitesse en « mode pédalage pur » même en cas de panne de batterie ou de décharge complète, alors que les trois variantes de la deuxième solution ne permettent uniquement le rapport minimal et maximal de la transmission.

Revenons maintenant aux figures 9, 10 et 11 pour décrire le fonctionnement du groupe motopropulseur suivant l'invention. Chaque moteur est équipé de son propre capteur à effet Hall et la vitesse angulaire de chaque moteur ainsi mesurée est renvoyée à l'unité de contrôle. L'unité de contrôle est également agencée pour obtenir une mesure du couple résistant en mesurant le courant passant dans l'induit du stator. En mode « assisté » l'unité de contrôle dispose donc à tout moment des informations de couple et de vitesse angulaire pour les deux moteurs et cela constitue un avantage considérable. En effet, connaissant la vitesse du planétaire (vitesse du premier moteur) et de la couronne (vitesse du deuxième moteur) du train épicycloïdal, la vitesse du plateau de sortie se calcule par les équations exposées précédemment et reprises ci-dessous. Ensuite, à la seule connaissance du couple du planétaire (premier moteur), se déduisent aisément le couple de la couronne (pédalier) et celui du porte-satellite (plateau de sortie) par la deuxième relation ci-dessous.

$$\omega_{plat} = \frac{\omega_{MVpl} + R\omega_{ped}}{R+1}$$

$$C_{MV} = \frac{C_{ped}}{R} = \frac{C_{plat}}{R+1}$$

Il est donc possible d'avoir l'information du couple appliqué sur les pédales par le cycliste, noté $C_{Homme}$, par la relation suivante :

$$C_{Homme} = C_{ped} - C_{MT}^{mes} = R.C_{MV}^{mes} - C_{MT}^{mes}$$

L'unité de contrôle règle ainsi à l'aide de la boucle de régulation le couple du premier moteur.

L'information du couple du cycliste est donc récupérée par les mesures de couples fournis par les deux moteurs. Une dernière information est nécessaire au contrôle du groupe motopropulseur, à savoir celle fournie par un capteur de vitesse installé sur la roue avant ou la roue arrière. En effet, la vitesse de la roue arrière peut être différente de la vitesse du pignon de roue lorsque le vélo est dit « en roue libre ». Il est alors nécessaire de connaître la vitesse exacte du vélo pour savoir si l'assistance peut être enclenchée ou non.

Le rôle principal du premier moteur est d'offrir le rapport de transmission désiré, comme décrit au préalable. Le premier moteur est donc régulé afin de suivre une consigne de vitesse. Cette consigne est en fait le coefficient « a » divisé par le rapport de réduction du deuxième moteur et multiplié ensuite par la mesure de vitesse du capteur à effet Hall équipant le deuxième moteur.

$$\omega_{MV}^{cons} = a.\,\omega_{psd} = \frac{a}{R_{MT}}.\,\omega_{MT}^{mes}$$

Suivant que la motorisation soit en mode « automatique » ou « manuel », le coefficient « a » sera imposé par l'unité de contrôle ou par le cycliste lui-même. Ces deux modes de gestion des vitesses seront exposés ci-dessous.

Le deuxième moteur de traction apportera la puissance manquante afin de respecter le niveau d'assistance « NivAssist » désiré. Ce moteur agira donc surtout sur les bas rapports de vitesse (le premier moteur donnant peu de puissance à la roue pour ce fonctionnement) et sa puissance s'atténuera au fur et à mesure que le coefficient multiplicateur « a » augmentera. Pour rappel, le niveau d'assistance est définit comme le rapport entre la puissance électrique fournie et la puissance totale sur le plateau de sortie de la motorisation. Il se caractérise en mode assisté par la relation suivante :

$$NivAssist = \frac{a + \dfrac{R_{MT}C_{MT}}{C_{MV}}}{a + R}$$

Le coefficient multiplicateur de vitesse « a » est soit choisi par le cycliste, soit calculé par l'algorithme de passage de vitesse automatique. Le R et $R_{\text{DEUXIÈME MOTEUR}}$ sont des valeurs dimensionnelles fixes propres aux engrenages. $C_{MV}$ peut être mesuré par l'unité de contrôle (mesure d'intensité). Afin d'avoir le niveau d'assistance requis, il suffit donc de piloter le couple du deuxième moteur. Le moteur de traction sera donc régulé de manière à suivre la consigne de couple suivante :

$$C_{MT}^{cons} = \frac{C_{MV}^{mes}.\,(NivAssist.\,(a+R) - a)}{R_{MT}}$$

L'unité de contrôle devra donc intégrer une boucle de régulation (figure 11) régulant le couple du deuxième moteur. A noter que la consigne de couple du premier moteur peut être soit positive, soit négative. Dans le cas où celle-ci est négative, le premier moteur fonctionnera en mode générateur et chargera ainsi la batterie.

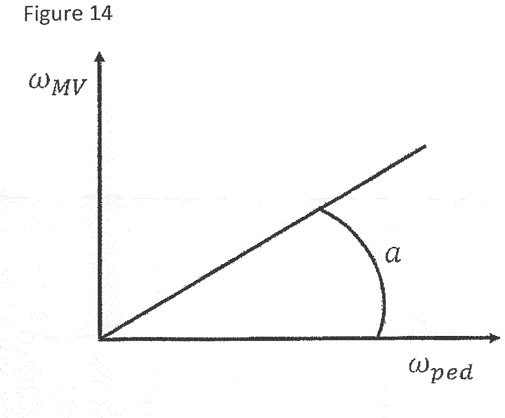

Comme décrit précédemment, le changement de rapport de vitesse se fait via le contrôle du coefficient multiplicateur « a ». La valeur minimale de a est la valeur nulle, ce qui correspond au premier rapport de vitesse mécanique lorsque la roue libre reliant le planétaire au boîtier de pédalier est bloquée. En augmentant le coefficient a, la démultiplication vue du pédalier augmente. Cela peut également se voir graphiquement (figure 14), le coefficient a est en fait la pente de la vitesse angulaire du premier moteur.

$$\omega_{MV} = a.\,\omega_{psd}$$

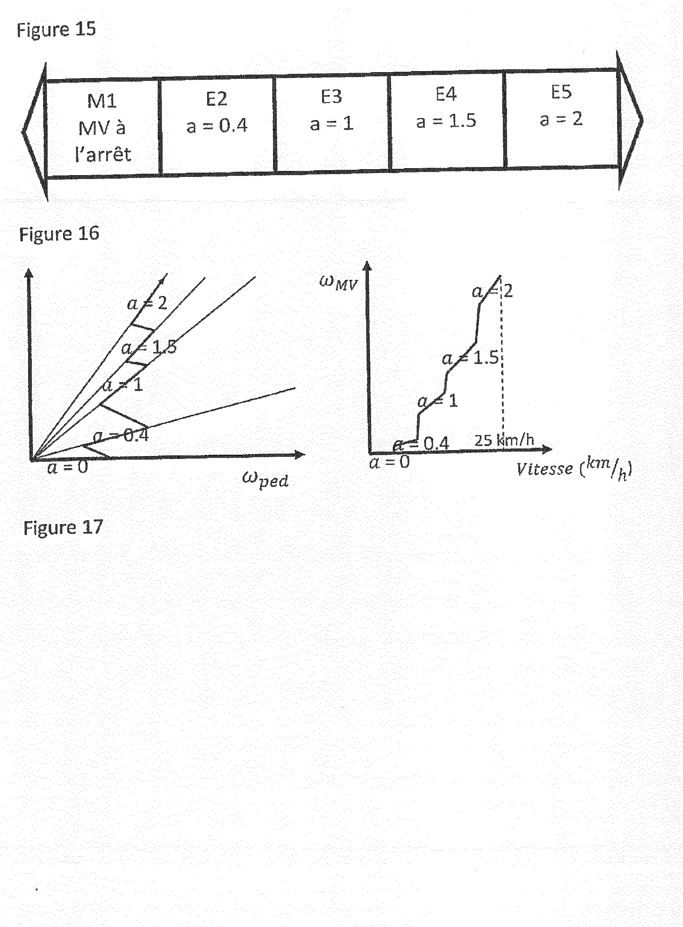

Techniquement parlant, le groupe motopropulseur serait équipé d'un petit boîtier électronique composé de deux boutons électroniques, fixé sur le guidon du vélo, et renvoyant l'information l'unité de contrôle via des fils électriques (ou éventuellement technologie sans fil). Un des deux boutons sert à monter de vitesse et l'autre à descendre. Le système de motorisation agit donc comme une boite électronique séquentielle. Un nombre de rapports discrets, correspondant chacun à une valeur du coefficient a, sera donc implanté dans l'ordinateur gérant la motorisation. En appuyant sur le bouton « + » l'unité de contrôle passe d'une valeur de « a » à la suivante plus élevée. En appuyant sur « - », l'unité de contrôle passe à une valeur plus faible de « a ». Ce fonctionnement est illustré par l'exemple repris à la figure 15. La motorisation intègre cinq rapports discrets. La première vitesse correspond à a = 0 et la 5ème correspond par exemple au rapport maximal ou a = 2. Ces chiffres ne sont toutefois pas représentatifs du dimensionnement final. Les rapports intermédiaires sont par exemple : a = 0.4, a = 1 et a = 1.5. Dans ce cas, l'organisation des vitesses se représente de cette manière. L'indice M signifie que le rapport est « mécanique » et l'indice E signifie que le rapport est électrique.

Si un cycliste, partant de l'arrêt, se met à accélérer jusqu'à la vitesse de 25 km/h, il passera successivement les rapports jusqu'au dernier. En passant les rapports, il fait grimper la valeur de a dans l'unité de contrôle.

L'avantage de cette version manuelle est d'offrir au cycliste la possibilité d'adapter ces rapports comme il le désire comme un vélo à dérailleur tout en offrant une grande qualité de changement de rapport. En effet, avec ce système, les changements de vitesse peuvent se faire à la volée (double clic, triple clic), sous couple et même à l'arrêt. De plus, la commande des vitesses est ici électronique et non plus mécanique, ce qui offre un facilité accrue d'appui sur les commande et offre une grande robustesse au système. Il n'y a ni de réglage à (re)faire, ni d'usure, ni de risque de panne (rupture du câble métallique). En résumé, il y un gain énorme en confort d'utilisation des vitesses.

En version avec changement de vitesse automatique, ce n'est plus le cycliste qui décide de la valeur du coefficient « a » à envoyer à l'unité de contrôle. Le coefficient « a » est maintenant calculé par l'unité de contrôle elle-même en fonction de certains paramètres. Une cartographie de changement de rapport est alors implantée dans l'unité de contrôle (comme pour le contrôle des boites automatiques pour automobile). La cartographie donnera la valeur de « a » à appliquer en fonction de deux paramètres : la vitesse du vélo et le couple sur le pédalier. Une cartographie est donnée à titre d'exemple sur la figure 16. Le schéma de la figure 16 représente un exemple de lois « montantes » en noir épais et des lois « rétrogrades » en noir fin qui indique les lieux de points des passages montants et descendants des vitesses (donc du coefficient « a ») pour une boite à trois vitesses.

Pour la version automatique, il sera possible d'augmenter le nombre de rapports disponibles infiniment pour obtenir une transmission continuellement variable appelée aussi « CVT ». Cela veut dire qu'au lieu d'avoir un nombre fini de rapports discrets, la motorisation changerait continûment le coefficient multiplicateur « a ». La représentation graphique est sur la figure 17. L'avantage de la version automatique est la simplicité même du système à implanter vu que plus aucun boîtier de commande des vitesses n'est nécessaire. Ceci libère aussi de la place sur le guidon et donne un style plus épuré au vélo. Ce type de commande serait plutôt adapté à des personnes désirant un confort important de roulage.

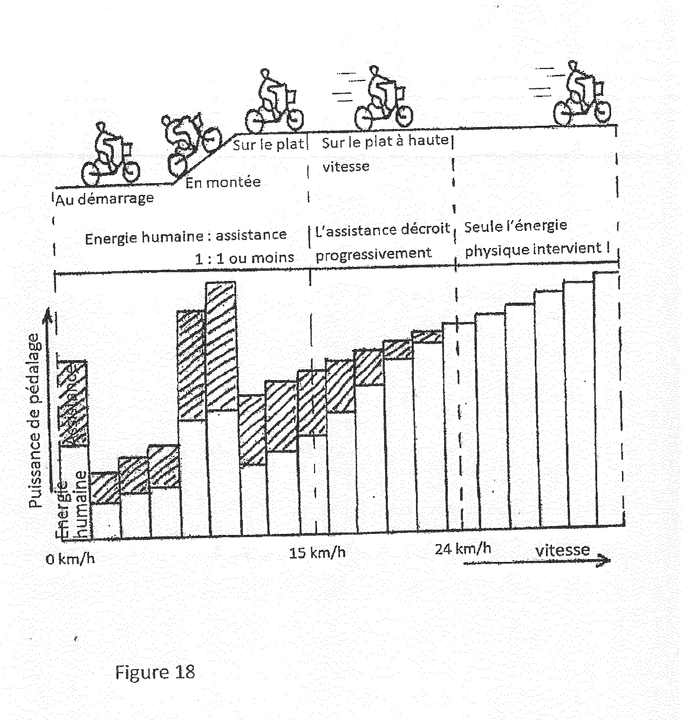

Les manières de contrôler le premier moteur 5 variateur et le deuxième moteur 4 de traction en mode normal (mode « assisté ») seront maintenant décrites. La figure 18 illustre l'assistance fournie en fonction du terrain sur lequel le cycliste se déplace. Le décollage signifie la mise en mouvement du vélo depuis l'arrêt. Le déclenchement de l'assistance se fait dès que la vitesse du pédalier atteint un certain seuil. A cet instant, l'information du couple sur le pédalier est disponible via la formule reprise ci-dessus. L'unité de contrôle est donc agencée pour calculer la consigne de couple à appliquer au deuxième moteur et le deuxième moteur se met ainsi en marche. Sur le plus petit rapport de vitesse, le premier moteur est hors tension, sur tous les autres rapports, il est en marche. Les deux moteurs sont maintenant régulés comme expliqués précédemment.

Pour que l'assistance soit réactive, il faut de préférence que l'unité de contrôle reçoive l'information de vitesse du premier moteur avec de faible temps de réponse. Pour cela, il est préférable que la résolution du capteur angulaire soit fine. Il ne devrait pas y avoir de problème à propos de cela car la pédale et le deuxième moteur sont séparés d'un réducteur ayant un rapport proche de 20, ce qui veut dire que le deuxième moteur aura fait un tour quand le pédalier n'aura fait qu'un vingtième de tour. Si on compte trois changements d'état du capteur à effet Hall par tour du deuxième moteur, cela nous donne une résolution de 6 degrés sur le pédalier ce qui devrait suffire.

Si toutefois une réactivité de l'assistance électrique au démarrage trop lente serait présente, la solution consiste à modifier la roue libre servant à bloquer le planétaire quand le premier moteur est hors tension. Cette roue libre serait libre en rotation (de 1 ou 2 degrés) dans le bâti du boîtier de pédalier et un interrupteur avec ressort serait inséré dans ce jeu. Quand le cycliste poussera sur la pédale pour mettre son vélo en mouvement, le planétaire aura tendance à vouloir tourner dans le sens contraire de la marche et appuiera contre l'interrupteur, ce qui lancera la marche du premier moteur et du deuxième moteur.

Que le passage de vitesses soit manuel ou automatique, dès que le coefficient « a »change, la consigne du premier moteur est ainsi modifiée et le premier moteur change son régime. Il est possible pour le mode manuel d'imposer des rampes d'accélération/décélération pour obtenir un changement de vitesse linéaire et lisse. Comme la plupart des vélos à assistance électrique, le groupe motopropulseur s'accompagne d'interrupteurs installés dans les poignées de freinage. Dès que l'unité de contrôle reçoit l'information de freinage, il met les deux moteurs électriques hors tension.

Quand le couple du cycliste mesuré passe en dessous d'un certain seuil, le deuxième moteur est mis hors tension. Le premier moteur réduit sa vitesse car il est lié à la vitesse de pédalage via le coefficient multiplicateur « a ». Si le cycliste pédale en arrière, faisant fonctionner la roue libre du pignon arrière du vélo, le premier moteur est mis hors tension.

La reprise se fait tout comme le démarrage car toutes les pièces du train épicycloïdal sont à l'arrêt avant que le cycliste ne recommence à mettre de l'effort sur ses pédales. La courroie (ou chaîne) ne tourne pas grâce à la roue libre placée dans le pignon arrière (comme pour un vélo classique). Dès qu'une mesure de vitesse du pédalier est captée, le premier moteur se met en route (si rapport de vitesse différent de celui le plus petit) en suivant la consigne de vitesse imposée par le rapport de vitesse enclenché. La boucle de régulation du deuxième moteur est également réactivée.

Le pédalage pur peut se pratiquer dans les situations où la batterie est déchargée ou en panne. Dans ce cas là le cycliste met son vélo en mouvement en pédalant simplement. Son vélo sera d'abord sur le premier rapport de vitesse mécanique (roue libre du planétaire bloquée contre le bâti). Les rapports suivants sont soit changés manuellement, soit automatiquement. L'énergie nécessaire à alimenter le premier moteur pour qui suive sa consigne de vitesse sera prélevée par le deuxième moteur fonctionnant ainsi en mode générateur. Son couple de frein étant piloté par le phasage de la commutation de la commande.

Quand le cycliste s'approche de la limite de vitesse en mode « assisté », la motorisation réduit d'abord progressivement son niveau d'assistance pour ensuite le mettre à zéro quand le vélo arrive précisément à cette limite. A partir de ce moment là, tout se passe comme le fonctionnement en « pédalage pur » mis à part le fait que la batterie peut alimenter le premier moteur en partie avec une puissance inférieure ou égale à celle perdue dans le fonctionnement « générateur deuxième moteur ». La batterie étant encore chargée, il est possible de combler les pertes encourues par le fonctionnement de la motorisation dans ce cas précis. De cette manière, l'entièreté de l'énergie fournie par le cycliste va à la roue (à l'exception des frottements encours par la transmission bien sûr).

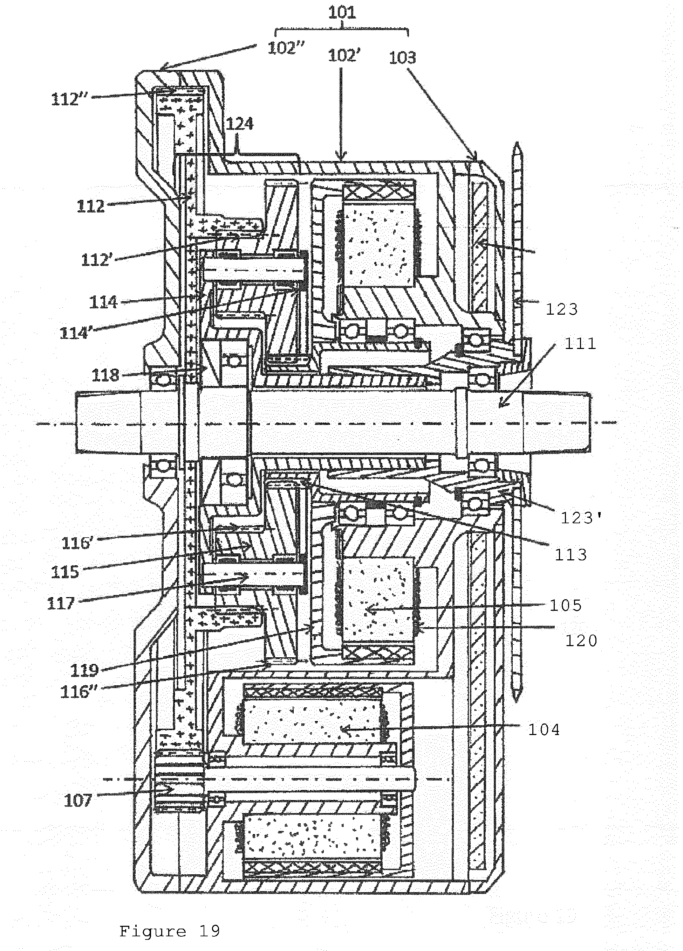

La figure 19 illustre une autre forme de réalisation du groupe motopropulseur suivant l'invention. Dans cette forme de réalisation l'ensemble des composants du groupe motopropulseur est situé à l'intérieur d'un boîtier fermé 101 et indépendant du cadre du vélo. Le boîtier 101 est constitué de trois parties assemblées, à savoir le carter droit 102', le carter gauche 102" et le couvercle 103. Le boîtier 101 est fixé au cadre du vélo à l'aide de fixations, par exemple formées par des visses de fixation. Le cas échéant le cadre du vélo sera adapté ou conçu pour y fixer le boîtier. Le boîtier 101 contient l'axe du pédalier 111 en son centre, les deux moteurs électriques 104 et 105 ainsi que le circuit électronique de contrôle 106.

Le premier moteur 105 comporte un stator 120 monté de façon coaxiale par rapport à un rotor 119. Le stator bobiné 120 est fixé au carter droit 102'. Le premier moteur est relié à un planétaire 113, faisant partie d'un train épicycloïdal 124. Le train épicycloïdal est composé des trois parties indépendantes à savoir le planétaire 113, le porte-satellite 114 et la couronne 112. Le planétaire étant de préférence monté de façon solidaire au rotor 119 du premier moteur 105. Le train épicycloïdal comporte également un ensemble de satellites 115 doubles. Chaque satellite 115 double est constitué de deux roues dentées, solidaires l'une de l'autre et préférentiellement de tailles différentes. La plus petite roue dentée est appelée « petit satellite » 116' et la plus grande roue dentée est appelée « grand satellite » 116". De préférence, il y aura trois satellites 115 doubles, car ceci permet un bon équilibre entre les pièces en mouvement et le poids du train épicycloïdal. Chaque satellite double 115 est monté sur un axe de satellite 117 par l'intermédiaire d'un ou deux roulement(s). L'axe de satellite 117 est fixé préférentiellement par ses deux extrémités au porte-satellite 114 d'un côté et à la plaque de renfort du porte-satellite 114' de l'autre côté. Le planétaire s'engrène avec les grands satellites 116" pour augmenter la vitesse de rotation du porte-satellite 114. En effet, la vitesse de rotation du porte-satellite 114 est une relation linéaire des vitesses de rotation de la couronne 112 et du planétaire 113. Le plateau de sortie 123 est solidaire du porte-satellite 114. Un axe de sortie 123' creux, monté de façon coaxiale autour de l'axe de pédalier 111, transmet le couple provenant du porte-satellite 114, situé du côté gauche, au plateau de sortie, situé du côté droit du boîtier 101. Le plateau de sortie 123 sert à y monter une chaîne ou une courroie crantée, qui sert à entraîner à son tour le pignon de la roue arrière du vélo. Les petits satellites 116' s'engrènent avec la denture interne 112' de la couronne 112, faisant elles-mêmes partie du train épicycloïdal. Une denture externe 112", solidaire de la couronne 112, s'engrène avec le deuxième moteur 104, qui à cette fin est pourvue d'un pignon entraîneur 107. La transmission entre le pignon entraîneur 107 et la couronne est fermée de manière étanche avec le carter gauche 102". L'axe de pédalier 111 est rendu solidaire de la couronne 112 du train épicycloïdal, par exemple à l'aide de cannelures non représentées sur le dessin. Bien entendu d'autres systèmes de blocage en rotation peuvent être prévus pour solidariser l'axe de pédalier et la couronne.

Le rotor 119 du premier moteur 105 est guidé par un ou deux roulement(s) logés dans le carter droit 102'. Un axe de pédalier 111 traversant le train épicycloïdal ainsi que l'axe de sortie est soutenu par deux roulements. A droite, le roulement est relié à l'axe de sortie 123'. A gauche, le roulement est logé dans le boîtier 101. L'axe de sortie 123' et le porte-satellite 114 s'assemblent pour former un assemblage rigide guidé par deux roulements. A droite, le roulement est logé dans le boîtier 101. A gauche, il s'agit d'un roulement équipé d'une roue libre 118 et relié à l'axe de pédalier 111, empêchant le porte-satellite 114 de tourner moins vite que l'axe de pédalier 111. La roue libre 118 force le rotor 119 du premier moteur 105 à tourner à la même vitesse que l'axe du pédalier si ce premier moteur n'est pas alimenté. Ainsi, les deux entrées du train épicycloïdal tournant à la même vitesse, font tourner le plateau de sortie à cette même vitesse (en vertu des équations cinématiques d'un train épicycloïdal). Cette disposition permet de garder une transmission de couple au cas où le premier moteur 105 serait surchargé ou en cas de panne du système du contrôle.

**Revendications**

1. Méthode d'utilisation d'un groupe motopropulseur pour un véhicule à pédales, en particulier un vélo (40), lequel groupe motopropulseur comprend une unité de contrôle (38, 106) agencée pour produire un premier et un deuxième signal de contrôle, un premier (5, 105) et un deuxième moteur (4, 104) ainsi qu'un train épicycloïdal (24, 124) ayant un porte-satellite (14, 114), une couronne (12, 112') et un planétaire (13, 113), lequel premier moteur (5, 105) est relié au train épicycloïdal (24, 124), lequel groupe motopropulseur comprend également un axe de pédalier (11, 111), le deuxième moteur (4, 104) étant engrené sur l'axe de pédalier (11, 111) et le premier moteur (5, 105) étant relié au planétaire (13, 113), le porte-satellite (14, 114) étant relié à un plateau de sortie (23, 123) du groupe motopropulseur, ledit premier (5, 105) respectivement deuxième moteur (4, 104) étant pourvu d'un premier respectivement d'un deuxième capteur agencé pour mesurer la vitesse angulaire du moteur auquel il est associé, lesdits premier et deuxième capteurs étant reliés à l'unité de contrôle (38, 106), ledit groupe motopropulseur comprenant un élément de mesure agencé pour produire un signal de mesure indiquant un couple fourni par le premier moteur (5, 105),le deuxième signal de contrôle étant un signal de pilotage en couple qui est fourni au deuxième moteur (4, 104),

   **caractérisé en ce que** la couronne (12, 112) est reliée à l'axe de pédalier (11, 111) pour former une première entrée du train épicycloïdal (24, 124),
   **en ce que** ladite unité de contrôle (38, 106) est agencée pour produire le premier et le deuxième signal de contrôle sur base des vitesses angulaires mesurées par les capteurs et de consignes prédéterminées ainsi que du signal de mesure indiquant le couple,
   et **en ce que** le premier signal de contrôle est un signal de pilotage de vitesse de rotation qui est fourni au premier moteur (5, 105).

2. Méthode de fabrication d'un groupe motopropulseur pour un véhicule à pédales, en particulier un vélo (40), lequel groupe motopropulseur comprend une unité de contrôle (38, 106) agencée pour produire un premier et un deuxième signal de contrôle, un premier (5, 105) et un deuxième moteur (4, 104) ainsi qu'un train épicycloïdal (24, 124) ayant un porte-satellite (14, 114), une couronne (12, 112') et un planétaire (13, 113), lequel premier moteur (5, 105) est relié au train épicycloïdal (24, 124), lequel groupe motopropulseur comprend également un axe de pédalier (11, 111), le deuxième moteur (4, 104) étant engrené sur l'axe de pédalier (11, 111) et le premier moteur (5, 105) étant relié au planétaire (13, 113), le porte-satellite (14, 114) étant relié à un plateau de sortie (23, 123) du groupe motopropulseur, ledit premier (5, 105) respectivement deuxième moteur (4, 104) étant pourvu d'un premier respectivement d'un deuxième capteur agencé pour mesurer la vitesse angulaire du moteur auquel il est associé, lesdits premier et deuxième capteurs étant reliés à l'unité de contrôle (38, 106), ledit groupe motopropulseur comprenant un élément de mesure agencé pour produire un signal de mesure indiquant un couple fourni par le premier moteur (5, 105),le deuxième signal de contrôle étant un signal de pilotage en couple qui est fourni au deuxième moteur (4, 104),

   **caractérisé en ce que** la couronne (12, 112) est reliée à l'axe de pédalier (11, 111) pour former une première entrée du train épicycloïdal (24, 124),
   **en ce que** ladite unité de contrôle (38, 106) est agencée pour produire le premier et le deuxième signal de contrôle sur base des vitesses angulaires mesurées par les capteurs et de consignes prédéterminées ainsi que du signal de mesure indiquant le couple,
   et **en ce que** le premier signal de contrôle est un signal de pilotage de vitesse de rotation qui est fourni au premier moteur (5, 105).

3. Groupe motopropulseur pour un véhicule à pédales, en particulier un vélo (40), lequel groupe motopropulseur comprend une unité de contrôle (38, 106) agencée pour produire un premier et un deuxième signal de contrôle, un premier (5, 105) et un deuxième moteur (4, 104) ainsi qu'un train épicycloïdal (24, 124) ayant un porte-satellite (14, 114), une couronne (12, 112') et un planétaire (13, 113), lequel premier moteur (5, 105) est relié au train épicycloïdal (24, 124), lequel groupe motopropulseur comprend également un axe de pédalier (11, 111), le deuxième moteur (4, 104) étant engrené sur l'axe de pédalier (11, 111) et le premier moteur (5, 105) étant relié au planétaire (13, 113), le porte-satellite (14, 114) étant relié à un plateau de sortie (23, 123) du groupe motopropulseur, ledit premier (5, 105) respectivement deuxième moteur (4, 104) étant pourvu d'un premier respectivement d'un deuxième capteur agencé pour mesurer la vitesse angulaire du moteur auquel il est associé, lesdits premier et deuxième capteurs étant reliés à l'unité de contrôle (38, 106), ledit groupe motopropulseur comprenant un élément de mesure agencé pour produire un signal de mesure indiquant un couple fourni par le premier moteur (5, 105),le deuxième signal de contrôle étant un signal de pilotage en couple qui est fourni au deuxième moteur (4, 104),

le premier moteur (5, 105) comportant un stator (20, 120) monté de façon coaxiale par rapport à un rotor (19, 119), **caractérisé en ce que** la couronne (12, 112) est reliée à l'axe de pédalier (11, 111) pour former une première entrée du train épicycloïdal (24, 124),

**en ce que** ladite unité de contrôle (38, 106) est agencée pour produire le premier et le deuxième signal de contrôle sur base des vitesses angulaires mesurées par les capteurs et de consignes prédéterminées ainsi que du signal de mesure indiquant le couple,

et **en ce que** le premier signal de contrôle est un signal de pilotage de vitesse de rotation qui est fourni au premier moteur (5, 105).

4. Groupe motopropulseur suivant la revendication 3 , **caractérisé en ce que** l'unité de contrôle (38, 106) comporte une entrée pour recevoir un signal de rapport de vitesse indiquant un rapport de vitesse sélectionné par le cycliste parmi un nombre prédéterminé de rapport de vitesse, laquelle unité de contrôle (38, 106) est agencée pour produire ledit premier signal de contrôle également en fonction du signal de rapport de vitesse reçu.

5. Groupe motopropulseur suivant la revendication 3, **caractérisé en ce qu'**il comprend un troisième capteur relié à l'unité de contrôle (38, 106) et agencé pour mesurer la vitesse à laquelle le vélo est propulsé par un cycliste, l'unité de contrôle (38, 106) étant agencée pour produire sur base de la vitesse mesurée un signal de rapport de vitesse indiquant un rapport de vitesse sélectionné parmi un nombre prédéterminé de rapport de vitesse, laquelle unité de contrôle (38, 106) est agencée pour produire ledit premier signal de contrôle également en fonction du signal de rapport de vitesse reçu.

6. Groupe motopropulseur suivant la revendication 4 ou 5, **caractérisé en ce que** l'unité de contrôle (38, 106) est agencée pour produire un signal pondéré obtenu par multiplication de la vitesse angulaire mesurée du deuxième moteur (4, 104) avec un signal de pondération obtenu à partir du signal de rapport de vitesse reçu pondéré d'un rapport de réduction du deuxième moteur (4, 104), et pour produire ledit premier signal de contrôle à l'aide du signal pondéré.

7. Groupe motopropulseur suivant l'une des revendications 4 à 6, **caractérisé en ce que** l'unité de contrôle (38, 106) est agencée pour comparer le premier signal de contrôle avec la vitesse angulaire mesurée du premier moteur (5, 105) et pour ajuster le premier signal en fonction d'une différence établie lors de cette comparaison pour maintenir la vitesse angulaire du premier moteur (5, 105) à celle imposée par le premier signal de contrôle.

8. Groupe motopropulseur suivant l'une des revendications 3 à 7, **caractérisé en ce que** l'unité de contrôle (38, 106) est agencée pour produire le deuxième signal de contrôle en fonction d'un niveau d'assistance sélectionné par le cycliste.

9. Groupe motopropulseur suivant l'une des revendications 3 à 8, **caractérisé en ce que** le rotor (19) du premier moteur (5) est monté par l'intermédiaire d'une roue libre (18) sur un châssis du groupe motopropulseur de telle façon à empêcher le rotor (19) de tourner en contre sens du sens de rotation prédéterminé du premier moteur (5).

10. Groupe motopropulseur suivant l'une des revendications 3 à 9, **caractérisé en ce que** le rotor (19) du premier moteur (5) est fixé sur roulement sur l'axe de pédalier (11).

11. Groupe motopropulseur suivant l'une des revendications 3 à 10, **caractérisé en ce que** le deuxième moteur (4, 104) est engrené sur l'axe de pédalier (11, 111) à l'aide d'une roue réceptrice (12", 112").

12. Groupe motopropulseur suivant l'une des revendications 3 à 11, **caractérisé en ce que** le rotor (19, 119) du premier moteur (5, 105) est solidaire du planétaire (13, 113).

13. Groupe motopropulseur suivant l'une des revendications 3 à 8, **caractérisé en ce que** le porte-satellite (114) est monté par l'intermédiaire d'une roue libre (118) sur l'axe de pédalier (111) de telle façon à empêcher le porte-satellite (114) de tourner moins vite que l'axe du pédalier (111).

14. Groupe motopropulseur suivant l'une des revendications 3 à 13, **caractérisé en ce qu'**il est agencé de façon telle que le rapport entre la vitesse angulaire du deuxième moteur (4, 104) et la vitesse angulaire de l'axe de pédalier (11, 111) est une valeur dimensionnelle fixe.

15. Vélo (40) équipé d'un groupe motopropulseur suivant l'une des revendications 3 à 14.

**Patentansprüche**

1. Verfahren zur Verwendung einem Antriebsstrang für ein Pedalfahrzeug, insbesondere ein Fahrrad (40), wobei der Antriebsstrang eine Steuereinheit (38, 106) umfasst, die dafür eingerichtet ist, ein erstes und ein zweites Steuersignal zu erzeugen, einen ersten (5, 105) und einen zweiten Motor (4, 104), sowie ein Planetengetriebe (24, 124), das einen Planetenradträger (14, 114), ein Hohlrad (12, 112') und ein Planetenrad (13, 113) aufweist, wobei der erste Motor (5, 105) mit dem Planetengetriebe (24, 124) verbunden ist, wobei der Antriebsstrang auch eine Tretlagerachse (11, 111) umfasst, wobei der zweite Motor (4, 104) mit der Tretlagerachse (11, 111) eingreift, und der erste Motor (5, 105) mit dem Planetenrad (13, 113) verbunden ist, wobei der Planetenradträger (14, 114) mit einer Abtriebsscheibe (23, 123) des Antriebsstrangs verbunden ist, wobei der erste (5, 105) beziehungsweise zweite Motor (4, 104) mit einem ersten beziehungsweise einem zweiten Sensor versehen ist, der dafür eingerichtet ist, die Winkelgeschwindigkeit des Motors, mit dem er assoziiert ist, zu messen, wobei der erste und der zweite Sensor mit der Steuereinheit (38, 106) verbunden sind, wobei der Antriebsstrang ein Messelement umfasst, das dafür eingerichtet ist, ein Messsignal zu erzeugen, das ein Drehmoment angibt, das von dem ersten Motor (5, 105) geliefert wird, wobei das zweite Steuersignal ein Drehmoment-Ansteuersignal ist, das an den zweiten Motor (4, 104) geliefert wird,

   **dadurch gekennzeichnet, dass** das Hohlrad (12, 112) mit der Tretlagerachse (11, 111) verbunden ist, um einen ersten Eingang des Planetengetriebes (24, 124) zu bilden,
   dadurch, dass die Steuereinheit (38, 106) dafür eingerichtet ist, das erste und das zweite Steuersignal auf Basis der von den Sensoren gemessenen Winkelgeschwindigkeiten und von vorbestimmten Sollwerten, sowie des Messsignals, das das Drehmoment angibt, zu erzeugen,
   und dadurch, dass das erste Steuersignal ein Drehzahl-Ansteuersignal ist, das den ersten Motor (5, 105) geliefert wird.

2. Verfahren zur Herstellung eines Antriebsstrangs für ein Pedalfahrzeug, insbesondere ein Fahrrad (40), wobei der Antriebsstrang eine Steuereinheit (38, 106) umfasst, die dafür eingerichtet ist, ein erstes und ein zweites Steuersignal zu erzeugen, einen ersten (5, 105) und einen zweiten Motor (4, 104) sowie ein Planetengetriebe (24, 124), das einen Satellitenträger (14, 114), ein Hohlrad (12, 112') und ein Planetenrad (13, 113) aufweist, wobei der erste Motor (5, 105) mit dem Planetengetriebe (24, 124) verbunden ist, wobei der Antriebsstrang auch eine Tretlagerachse (11, 111) umfasst, wobei der zweite Motor (4, 104) mit der Tretlagerachse (11, 111) eingreift, und der erste Motor (5, 105) mit dem Planetenrad (13, 113) verbunden ist, der Satellitenträger (14, 114) mit einer Abtriebsscheibe (123, 123) des Antriebsstrangs verbunden ist, wobei der erste (5, 105) beziehungsweise der zweite Motor (4, 104) mit einem ersten beziehungsweise einem zweiten Sensor versehen ist, der dafür eingerichtet ist, die Winkelgeschwindigkeit des Motors, mit dem er assoziiert ist, zu messen, wobei der erste und der zweite Sensor mit der Steuereinheit (38, 106) verbunden sind, wobei der Antriebsstrang ein Messelement umfasst, das eingerichtet ist, um ein Messsignal zu erzeugen, das ein Drehmoment angibt, das von dem ersten Motor (5, 105) geliefert wird, wobei das zweite Steuersignal ein Drehmoment-Ansteuersignal ist, das an den zweiten Motor (4, 104) geliefert wird,

   **dadurch gekennzeichnet, dass** das Hohlrad (12, 112) mit der Tretlagerachse (11, 111) verbunden ist, um einen ersten Eingang des Planetengetriebes (24, 124) zu bilden,
   dadurch, dass die Steuereinheit (38, 106) dafür eingerichtet ist, das erste und das zweite Steuersignal auf Basis der von den Sensoren gemessenen Winkelgeschwindigkeiten und von vorbestimmten Sollwerten, sowie des Messsignals, das das Drehmoment angibt, zu erzeugen,
   und dadurch, dass das erste Steuersignal ein Drehzahl-Ansteuersignal ist, das den ersten Motor (5, 105) geliefert wird.

3. Antriebsstrang für ein Pedalfahrzeug, insbesondere ein Fahrrad (40), wobei der Antriebsstrang eine Steuereinheit (38, 106) umfasst, die dafür eingerichtet ist, ein erstes und ein zweites Steuersignal zu erzeugen, einen ersten (5, 105) und einen zweiten Motor (4, 104), sowie ein Planetengetriebe (24, 124), das einen Planetenradträger (14, 114), ein Hohlrad (12, 112') und ein Planetenrad (13, 113) aufweist, wobei der erste Motor (5, 105) mit dem Planetengetriebe (24, 124) verbunden ist, wobei der Antriebsstrang auch eine Tretlagerachse (11, 111) umfasst, wobei der zweite Motor (4, 104) mit der Tretlagerachse (11, 111) eingreift, und der erste Motor (5, 105) mit dem Planetenrad (13, 113) verbunden ist, wobei der Planetenradträger (14, 114) mit einer Abtriebsscheibe (23, 123) des Antriebsstrangs verbunden ist, wobei der erste (5, 105) beziehungsweise zweite Motor (4, 104) mit einem ersten beziehungsweise einem zweiten Sensor versehen ist, der dafür eingerichtet ist, die Winkelgeschwindigkeit des Motors, mit dem er assoziiert ist, zu messen, wobei der erste und der zweite Sensor mit der Steuereinheit (38, 106) verbunden sind, wobei der Antriebsstrang ein Messelement umfasst, das dafür eingerichtet ist, ein Messsignal zu erzeugen, das ein Drehmoment angibt, das von dem ersten Motor (5, 105) geliefert wird, wobei das zweite Steuersignal ein Drehmoment-Ansteuersignal ist, das an den zweiten Motor (4, 104) geliefert wird,

der erste Motor (5, 105) einen Stator (20, 120) umfasst, der auf koaxiale Weise in Bezug auf einen Rotor (19, 119) montiert ist,

**dadurch gekennzeichnet, dass** das Hohlrad (12, 112) mit der Tretlagerachse (11, 111) verbunden ist, um einen ersten Eingang des Planetengetriebes (24, 124) zu bilden,

dadurch, dass die Steuereinheit (38, 106) dafür eingerichtet ist, das erste und das zweite Steuersignal auf Basis der von den Sensoren gemessenen Winkelgeschwindigkeiten und von vorbestimmten Sollwerten, sowie des Messsignals, das das Drehmoment angibt, zu erzeugen,

und dadurch, dass das erste Steuersignal ein Drehzahl-Ansteuersignal ist, das den ersten Motor (5, 105) geliefert wird.

4. Antriebsstrang nach Anspruch 3, **dadurch gekennzeichnet, dass** die Steuereinheit (38, 106) einen Eingang umfasst, um ein Übersetzungsverhältnissignal zu empfangen, das Übersetzungsverhältnis angibt, das von dem Fahrradfahrer aus einer vorbestimmten Anzahl von Übersetzungsverhältnissen ausgewählt wird, wobei die Steuereinheit (38, 106) eingerichtet ist, um das erste Steuersignal auch abhängig von dem empfangenen Übersetzungsverhältnissignal zu erzeugen.

5. Antriebsstrang nach Anspruch 3, **dadurch gekennzeichnet, dass** es einen dritten Sensor umfasst, der mit der Steuereinheit (38, 106) verbunden und dafür eingerichtet ist, die Geschwindigkeit zu messen, mit der das Fahrrad von einem Fahrradfahrer angetrieben wird, wobei die Steuereinheit (38, 106) dafür eingerichtet ist, auf Basis der gemessenen Geschwindigkeit ein Übersetzungsverhältnissignal zu erzeugen, das ein aus einer vorbestimmten Anzahl von Übersetzungsverhältnissen ausgewähltes Übersetzungsverhältnis angibt, wobei die Steuereinheit (38, 106) dafür eingerichtet ist, das erste Steuersignal auch abhängig von dem empfangenen Übersetzungsverhältnissignal zu erzeugen.

6. Antriebsstrang nach Anspruch 4 oder 5, **dadurch gekennzeichnet, dass** die Steuereinheit (38, 106) dafür eingerichtet ist, ein gewichtetes Signal zu erzeugen, das durch Multiplikation der gemessenen Winkelgeschwindigkeit des zweiten Motors (4, 104) mit einem Gewichtungssignal erhalten wird, das von dem empfangenen, gewichteten Übersetzungsverhältnissignal eines Untersetzungsverhältnisses des zweiten Motors (4, 104) ausgehend erhalten wird, und dafür, das erste Steuersignal mit Hilfe des gewichteten Signals zu erzeugen.

7. Antriebsstrang nach einem der Ansprüche 4 bis 6, **dadurch gekennzeichnet, dass** die Steuereinheit (38, 106) dafür eingerichtet ist, das erste Steuersignal mit der gemessenen Winkelgeschwindigkeit des ersten Motors (5, 105) zu vergleichen, und dafür, das erste Signal abhängig von einer bei diesem Vergleich festgestellten Differenz anzupassen, um die Winkelgeschwindigkeit des ersten Motors (5, 105) auf derjenigen zu halten, die von dem ersten Steuersignal vorgegeben ist.

8. Antriebsstrang nach einem der Ansprüche 3 bis 7, **dadurch gekennzeichnet, dass** die Steuereinheit (38, 106) dafür eingerichtet ist, das zweite Steuersignal abhängig von einem von dem Fahrradfahrer ausgewählten Unterstützungsgrad zu erzeugen.

9. Antriebsstrang nach einem der Ansprüche 3 bis 8, **dadurch gekennzeichnet, dass** der Rotor (19) des ersten Motors (5) über ein Losrad (18) derart an einem Rahmen des Antriebsstrangs montiert ist, dass der Rotor (19) daran gehindert wird, in Gegenrichtung der vorbestimmten Drehrichtung des ersten Motors (5) zu drehen.

10. Antriebsstrang nach einem der Ansprüche 3 bis 9, **dadurch gekennzeichnet, dass** der Rotor (19) des ersten Motors (5) an einem Lager an der Tretlagerachse (11) befestigt ist.

11. Antriebsstrang nach einem der Ansprüche 3 bis 10, **dadurch gekennzeichnet, dass** der zweite Motor (4, 104) mit Hilfe eines Aufnahmerades (12", 112") mit der Tretlagerachse (11, 111) in Eingriff steht.

12. Antriebsstrang nach einem der Ansprüche 3 bis 11, **dadurch gekennzeichnet, dass** der Rotor (19, 119) des ersten Motors (5, 105) fest mit dem Planetenrad (13, 113) verbunden ist.

13. Antriebsstrang nach einem der Ansprüche 3 bis 8, **dadurch gekennzeichnet, dass** der Planetenradträger (114) über ein Losrad (118) derart an der Tretlagerachse (111) montiert ist, dass der Planetenradträger (114) daran gehindert wird, langsamer als die Tretlagerachse (111) zu drehen.

**14.** Antriebsstrang nach einem der Ansprüche 3 bis 13, **dadurch gekennzeichnet, dass** es derart eingerichtet ist, dass das Verhältnis zwischen der Winkelgeschwindigkeit des zweiten Motors (4, 104) und der Winkelgeschwindigkeit der Tretlagerachse (11, 111) ein fester Dimensionswert ist.

**15.** Fahrrad (40), das mit einem Antriebsstrang nach einem der Ansprüche 3 bis 14 ausgestattet ist.

**Claims**

**1.** Method of using a motive power unit for a pedal vehicle, in particular a bicycle (40), said motive power unit comprising a control unit (38, 106) arranged to produce a first and second control signal, a first (5, 105) and second motor (4, 104) as well as an epicyclic train (24, 124) having a planet holder (14, 114), a ring (12, 112') and a sun gear (13, 113), said first motor (5, 105) being connected to the epicyclic train (24, 124), said motive power unit also comprising a bottom-bracket spindle (11, 111), the second motor (4, 104) being meshed on the bottom-bracket spindle (11, 111) and the first motor (5, 105) being connected to the sun gear (13, 113), the planet holder (14, 114) being connected to an output sprocket (23, 123) of the motive power unit, said first (5, 105) and respectively second motor (4, 104) being provided with a first and respectively a second sensor arranged to measure the angular velocity of the motor with which it is associated, said first and second sensors being connected to the control unit (38, 106), said motive power unit comprising a measuring element arranged to produce a measurement signal indicating a torque supplied by the first motor (5, 105), the second control signal being a torque control signal that is supplied to the second motor (4, 104),

> **characterized in that** the ring (12, 112') is connected to the bottom-bracket spindle (11, 111) in order to form a first input of the epicyclic train (24, 124),
> **in that** said control unit (38, 106) is arranged to produce the first and second control signal on the basis of the angular speeds measured by the sensors and predetermined set values as well as the measurement signal indicating the torque, and **in that** said first control signal is a rotation speed control signal that is supplied to the first motor (5, 105).

**2.** Method of manufacturing a motive power unit for a pedal vehicle, in particular a bicycle (40), said motive power unit comprising a control unit (38, 106) arranged to produce a first and second control signal, a first (5, 105) and second motor (4, 104) as well as an epicyclic train (24, 124) having a planet holder (14, 114), a ring (12, 112') and a sun gear (13, 113), said first motor (5, 105) being connected to the epicyclic train (24, 124), said motive power unit also comprising a bottom-bracket spindle (11, 111), the second motor (4, 104) being meshed on the bottom-bracket spindle (11, 111) and the first motor (5, 105) being connected to the sun gear (13, 113), the planet holder (14, 114) being connected to an output sprocket (23, 123) of the motive power unit, said first (5, 105) and respectively second motor (4, 104) being provided with a first and respectively a second sensor arranged to measure the angular velocity of the motor with which it is associated, said first and second sensors being connected to the control unit (38, 106), said motive power unit comprising a measuring element arranged to produce a measurement signal indicating a torque supplied by the first motor (5, 105), the second control signal being a torque control signal that is supplied to the second motor (4, 104),

> **characterized in that** the ring (12, 112') is connected to the bottom-bracket spindle (11, 111) in order to form a first input of the epicyclic train (24, 124),
> **in that** said control unit (38, 106) is arranged to produce the first and second control signal on the basis of the angular speeds measured by the sensors and predetermined set values as well as the measurement signal indicating the torque, and **in that** said first control signal is a rotation speed control signal that is supplied to the first motor (5, 105).

**3.** Motive power unit for a pedal vehicle, in particular a bicycle (40), said motive power unit comprising a control unit (38, 106) arranged to produce a first and second control signal, a first (5, 105) and second motor (4, 104) as well as an epicyclic train (24, 124) having a planet holder (14, 114), a ring (12, 112') and a sun gear (13, 113), said first motor (5, 105) being connected to the epicyclic train (24, 124), said motive power unit also comprising a bottom-bracket spindle (11, 111), the second motor (4, 104) being meshed on the bottom-bracket spindle (11, 111) and the first motor (5, 105) being connected to the sun gear (13, 113), the planet holder (14, 114) being connected to an output sprocket (23, 123) of the motive power unit, said first (5, 105) and respectively second motor (4, 104) being provided with a first and respectively a second sensor arranged to measure the angular velocity of the motor with which it is associated, said first and second sensors being connected to the control unit (38, 106), said motive power unit comprising a measuring element arranged to produce a measurement signal indicating a torque supplied by the first motor (5, 105), the second control signal being a torque control signal that is supplied to the second motor (4, 104),

the first motor (5, 105) comprising a stator (20, 120) coaxially mounted with a rotor (19, 119),
**characterized in that** the ring (12, 112') is connected to the bottom-bracket spindle (11, 111) in order to form a first input of the epicyclic train (24, 124),
**in that** said control unit (38, 106) is arranged to produce the first and second control signal on the basis of the angular speeds measured by the sensors and predetermined set values as well as the measurement signal indicating the torque, and **in that** said first control signal is a rotation speed control signal that is supplied to the first motor (5, 105).

4. Motive power unit according to claim 3, **characterised in that** the control unit (38, 106) comprises an input for receiving a gear ratio signal indicating a gear ratio selected by the cyclist from a predetermined number of gear ratio, said control unit (38, 106) being arranged to produce said first control signal also as a function of the gear ratio signal received.

5. Motive power unit according to claim 3, **characterised in that** it comprises a third sensor connected to the control unit (38, 106) and arranged to measure the speed at which the bicycle is being propelled by a cyclist, the control unit (38, 106) being arranged to produce on the basis of the measured speed a gear ratio signal indicating a gear ratio selected from a predetermined number of gear ratio, said control unit (38, 106) being arranged to produce said first control signal also according to the gear ratio signal received.

6. Motive power unit according to claim 4 or 5, **characterised in that** the control unit (38, 106) is arranged to produce a weighted signal obtained by multiplication of the measured angular velocity of the second motor (4, 104) with a weighting signal obtained from the gear ratio signal received weighted by a reduction ratio of the second motor (4, 104), and to produce said first control signal by means of the weighted signal.

7. Motive power unit according to any of claims 4 to 6, **characterised in that** the control unit (38, 106) is arranged to compare the first control signal with the measured angular velocity of the first motor (5, 105) and to adjust the first signal according to a difference established during this comparison in order to maintain the angular velocity of the first motor (5, 105) at that imposed by the first control signal.

8. Motive power unit according to any of claims 3 to 7, **characterised in that** the control unit (38, 106) is arranged to produce the second control signal according to an assistance level selected by the cyclist.

9. Motive power unit according to any of claims 3 to 8, **characterised in that** the rotor (19) of the first motor (5) is mounted via a freewheel (18) on a motive power unit frame in such a way as to prevent the rotor (19) from rotating against the predetermined direction of rotation of the first motor (5).

10. Motive power unit according to any of claims 3 to 9, **characterised in that** the rotor (19) of the first motor (5) is bearing-mounted on the bottom-bracket spindle (11).

11. Motive power unit according to one of claims 3 to 10, **characterized in that** the second motor (4, 104) is geared to the bottom-bracket spindle (11, 111) by means of a reception wheel (12", 112").

12. Motive power unit according to one of claims 3 to 11, **characterized in that** the rotor (19, 119) of the first motor (5, 105) is integral with the sun gear (13, 113).

13. Motive power unit according to one of claims 3 to 8, **characterized in that** the planet holder (114) is mounted via a freewheel (118) on the bottom-bracket spindle (111) in such a way as to prevent the planet holder (114) from rotating slower than the bottom-bracket spindle (111).

14. Motive power unit according to any of claims 3 to 13, **characterized in that** it is arranged such that the ratio between the angular speed of the second motor (4, 104) and the angular speed of the bottom-bracket spindle (11, 111) is a fixed dimensional value.

15. Bicycle (40) equipped with a motive power unit according to any one of claims 3 to 14.

Figure 1

Figure 2

## Figure 3

| | |
|---|---|
| Batterie 30 | |
| Cycliste 31 | |
| Moteur MT 4 | |
| Réducteur 32 | |
| Σ 33 | |
| Couronne 12 P-S Planétaire | |
| Moteur MV 5 | |
| Plateau de sortie 23 | |

## Figure 4

Figure 5

Figure 6

Figure 7

Figure 8

13

16

14

Figure 9

| Batterie |
| 30 |

| Capteur à effet Hall 1 |
| 35 |

| Moteur MV |
| 5 |

| Contrôleur |
| 38 |

| Moteur MT |
| 4 |

| Capteur de vitesse à la roue |
| 37 |

| Capteur à effet Hall 2 |
| 36 |

Figure 10

Figure 11

Figure 12

Mise hors-tension du système de contrôle

Mise sous tension du système de

Bouton OFF système de contrôle ?

OUI

NON

Mesure de $\omega_{MT}$ :

$\omega_{MT} > 0$ ?

NON

OUI

Set MV ON : régulation en vitesse

Set MT ON : régulation en couple

Capteur de freins :
Capteur ON ?

NON

OUI

Set MT OFF

NON

Set MT OFF

NON

Figure 13

Figure 14

Figure 15

| M1 MV à l'arrêt | E2 a = 0.4 | E3 a = 1 | E4 a = 1.5 | E5 a = 2 |

Figure 16

Figure 17

Figure 18

Figure 19

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010092331 A
- JP 2008285069 A